# FASCICULE DE BREVET EUROPEEN

(11) **EP 3 250 807 B1**
(45) Date de publication et mention de la délivrance du brevet: **04.09.2024**
(21) Numéro de dépôt: 16707837.7
(22) Date de dépôt: 27.01.2016
(51) Int. Cl.: F02G 1/02

(54) **MOTEUR À COMBUSTION**
VERBRENNUNGSMOTOR
COMBUSTION ENGINE

(30) Priorité: 30.01.2015 FR 1550762; 25.02.2015 FR 1551593; 02.12.2015 FR 1561704
(43) Date de publication de la demande: 06.12.2017
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2016/050161
(87) Numéro de publication internationale: WO 2016/120560

(56) Documents cités:
- US-A- 3 995 431
- US-A- 4 653 269
- US-A1- 2003 228 237
- US-A1- 2006 218 924

## Description

La présente invention est relative à un moteur thermique à transfert-détente et régénération.

Les moteurs thermiques alternatifs à combustion interne les plus couramment utilisés exécutent le cycle d'Otto ou de Beau de Rochas s'agissant des moteurs à allumage commandé, ou le cycle de Diesel s'agissant des moteurs à allumage par compression. Diverses variantes de ces cycles permettent notamment des rendements améliorés comme le cycle de Miller ou le cycle d'Atkinson.

On connait d'après le brevet US 4653269 un moteur thermique avec un compresseur, une chambre de combustion externe à partir de laquelle les gaz de combustion passent à travers une soupape appropriée vers un détendeur, un compresseur d'air, un échangeur de chaleur où les gaz d'échappement de l'expanseur préchauffent l'air comprimé qui s'écoule ensuite vers la chambre de combustion, et un accumulateur pour stocker l'air comprimé inutile du compresseur. Le système a également la capacité de freinage régénératif, c'est-à-dire de ralentir le moteur en l'utilisant comme compresseur pour comprimer l'air qui est passé à l'accumulateur.

On distingue principalement les moteurs à quatre temps qui réalisent leur cycle en quatre courses de piston, des moteurs à deux temps qui exécutent leur cycle en seulement deux courses de piston.

Dans leur très grande majorité, les moteurs à allumage commandé délivrent un rendement maximal qui n'excède guère trente-cinq pourcent. Les moteurs Diesel rapides qui équipent les automobiles ou les poids-lourds délivrent un rendement de crête de l'ordre de quarante à quarante-cinq pourcent. Seuls les moteurs Diesel deux temps lents de très grosse cylindrée dépassent les cinquante pourcent de rendement sur leurs meilleurs points de fonctionnement. Ainsi, quel que soit le cas d'application ou le type de moteur thermique alternatif à combustion interne, entre la moitié et les deux tiers du contenu énergétique du carburant sont perdus.

Les pertes énergétiques sont essentiellement constituées de chaleur émise à l'échappement et de chaleur exportée par le système de refroidissement. Les pertes par frottement et les pertes par pompage constituent également une perte énergétique notable qui se traduit également par la dispersion de chaleur dans l'environnement. De moindre importance, le carburant imbrûlé ou partiellement brûlé constitue également une perte. Ces pertes proviennent de diverses limites inhérentes à la conception des moteurs thermiques alternatifs à combustion interne selon l'état de l'art.

En premier lieu, on remarque que dans lesdits moteurs, il y a une grande différence entre d'une part, la température maximale atteinte par les gaz lors de leur combustion et d'autre part, la température à laquelle sont maintenues les
parois internes desdits moteurs c'est-à-dire leurs cylindres, culasse et calottes de pistons. Lesdites parois sont en effet refroidies car d'une part, il faut maintenir à une température acceptable l'huile qui les recouvre en fine couche et lubrifie les segments et les pistons, et car d'autre part, si la température desdites parois est trop élevée, les gaz frais entrant dans lesdits cylindres sont immédiatement réchauffés à l'excès dès leur introduction dans lesdits cylindres ce qui a pour conséquence de limiter la masse desdits gaz pouvant être introduite dans lesdits cylindres à même pression d'admission.

En outre, particulièrement dans le cas des moteurs à allumage commandé, si les gaz frais sont excessivement réchauffés en phase d'admission, la charge qu'ils constituent avec le carburant devient sensible à la détonation et il faut soit en retarder la combustion, soit en limiter la compression. Ces deux dispositions correctives détériorent le rendement desdits moteurs. En outre, si les gaz frais admis sont excessivement réchauffés, leur température en fin de combustion et en début de détente sera plus élevée et ils produiront davantage d'oxydes d'azote, qui sont des polluants. Le refroidissement des parois internes des moteurs thermiques alternatifs à combustion interne conventionnels est donc indispensable. Toutefois, ledit refroidissement conduit à une importante perte d'énergie et de rendement conduisant à une consommation de carburant élevée.

Parmi les autres limites inhérentes à la conception des moteurs thermiques alternatifs à combustion interne selon l'état de l'art, on note que l'admission des gaz frais, la combustion desdits gaz puis la détente desdits gaz s'opèrent dans la même chambre. Or, il faudrait une chambre plutôt froide pour accueillir les gaz frais, et une chambre plutôt chaude pour éviter les déperditions de chaleur lorsque lesdits gaz sont brûlés. Ce n'est pas le cas.

Les différentes phases que sont l'admission des gaz frais, leur pré-compression, leur combustion-détente, et leur évacuation dite « échappement » s'opérant dans la même chambre et le même cylindre, lesdites phases ne peuvent avoir lieu simultanément et doivent se succéder dans le temps.

Ce séquençage implique une combustion intermittente qui doit être initialisée et développée à chaque cycle. De ce fait, il faut réunir pour chaque mise à feu les conditions nécessaires à son bon déroulement dans un temps très court. Ces conditions varient fortement en fonction du régime et de la charge des moteurs. Il résulte de cela une production importante d'imbrûlés, une combustion opérée à volume variable puisqu'il faut laisser à cette dernière le temps de se développer sans qu'il ne soit possible d'arrêter le piston, et une grande sensibilité à la nature du carburant qui doit s'enflammer sans détonation en allumage commandé, et qui doit brûler en toutes circonstances en Diesel malgré l'absence de toute étincelle d'allumage.

S'agissant des moteurs à allumage commandé, on note l'importance décisive de l'homogénéité et de la composition de la charge introduite dans les cylindres et notamment, du rapport air/carburant et ceci, tant pour des raisons d'inflammabilité de ladite charge, que pour des raisons de post-traitement des polluants produits par la combustion de ladite charge, par exemple au moyen d'un catalyseur trois-voies.

On remarque aussi la forte dépendance de ces moteurs au taux de compression. En théorie, ce dernier se devrait d'être le plus élevé possible pour réaliser une détente maximale des gaz et recueillir le maximum de travail sur le piston. En pratique, les limites de détonation du carburant et la maîtrise des échanges de chaleur avec les parois internes du moteur fixent le taux de compression admissible par ce dernier bien en deçà du taux de compression théoriquement idéal pour le rendement.

La combustion des moteurs à cycle d'Otto ou de Diesel s'opérant en un temps très court, on remarque la sensibilité particulière desdits moteurs au rapport bielle/manivelle sur lequel repose la loi de variation du volume de la chambre de combustion. La combustion n'y étant pas opérée à volume constant, une part de ladite combustion s'opère avant le point mort haut du piston dans un volume allant se réduisant ce qui conduit à une température inutilement élevée des gaz et à des pertes de chaleur nuisibles au rendement thermodynamique, tandis que l'autre part de ladite combustion s'opère après le point mort haut du piston dans un volume allant en augmentant de sorte qu'une part de ladite combustion s'opère durant la détente, ce qui nuit également audit rendement thermodynamique.

La nature séquentielle des cycles d'Otto ou de Diesel implique également de générer les turbulences nécessaires pour garantir une homogénéité air-carburant suffisante, et pour plisser le front de flamme afin d'en favoriser la propagation dans le volume de la chambre de combustion. Outre générer des pertes par pompage additionnelles, lesdites turbulences augmentent les échanges de chaleur entre les gaz chauds et les parois que leur exposent le cylindre, la culasse et le piston. A ce titre, lesdites turbulences augmentent les pertes thermiques lesquelles limitent le rendement.

Une fois la détente des gaz brûlés réalisée pour en recueillir le travail, lesdits gaz sont évacués dans l'atmosphère sans que le moteur ne permette d'en ré-exploiter la chaleur résiduelle.

En alternative aux moteurs thermiques alternatifs à combustion interne selon l'état de l'art, on connaît les moteurs centrifuges à turbine à cycle de Brayton, avec régénération. La version la plus évoluée de ces moteurs est sans conteste celle prévoyant au moins deux étages de compresseurs avec refroidisseur intermédiaire. Cette configuration permet d'exploiter au mieux l'échangeur de régénération et est par exemple mise en oeuvre dans le moteur « Rolls-Royce WR-21 » destiné à certains navires militaires. Le rendement de ces moteurs dépasse quarante pourcent.

Ces moteurs présentent l'avantage d'opérer une combustion non plus séquentielle mais continue, et de séparer dans l'espace et de confier à des organes dédiés les différentes phases du cycle thermodynamique que sont l'admission, la compression, la combustion, la détente, et l'échappement.

Malheureusement, ces moteurs à cycle de Brayton à régénération n'offrent au final qu'un rendement à peine meilleur que celui des moteurs à allumage commandé. Ce rendement est comparable à celui des moteurs Diesel rapides et est inférieur à celui des moteurs Diesel deux-temps lents et de très grosse cylindrée. En outre, l'efficacité énergétique des moteurs à cycle de Brayton à régénération chute rapidement en dehors de la plage de puissance où ils produisent leur meilleur rendement. De plus, en transitoires de puissance, leur temps de réponse est long. Leur champ d'application est à ce titre limité.

Une autre limite notoire des moteurs à cycle de Brayton à régénération est leur forte dépendance au rendement des turbines et compresseurs centrifuges qui les constituent. En l'état actuel de l'art et de la technique, le rendement de ces composants est limité, et les marges de progrès restantes ne laissent pas envisager de saut technologique à court terme capable de rendre compétitifs lesdits moteurs par rapport aux moteurs alternatifs à cycle de Diesel.

Pourtant, les calculs démontrent qu'un moteur à cycle de Brayton à régénération équipé d'une turbine motrice et de deux turbocompresseurs étagés avec refroidisseur intermédiaire pourrait théoriquement délivrer un rendement total très élevé, supérieur à cinquante pourcent. Pour cela, il faut que les turbines et compresseurs centrifuges qui le constituent aient un rendement de l'ordre de quatre vingt cinq à quatre vingt dix pourcent tandis que celui de l'échangeur de régénération doit être de l'ordre de quatre vingt quinze pourcent. Si on augmente encore le rendement de ces organes, le rendement final peut monter à soixante dix pourcent voire davantage pour des températures de combustion de l'ordre de seulement mille à mille cent degrés Celsius.

Malheureusement, ces rendements de compression et de détente des gaz sont quasiment inaccessibles à des compresseurs et turbines centrifuges. Pour autant, ces rendements sont théoriquement accessibles à des machines à piston sous réserve que leur rendement volumétrique soit suffisant et que les pertes par pompage et par frottement qu'elles génèrent soient suffisamment faibles. Les rendements nécessaires évoqués pour les échangeurs de température à contre-courant sont également accessibles.

Le problème réside principalement dans la réalisation d'un cylindre de détente dont la température des parois internes est proche de celle très élevée des gaz de combustion laquelle est de l'ordre de mille degrés Celsius voire plus. Un tel cylindre doit rester pérenne, étanche et mécaniquement fiable.

Le premier problème réside dans les moyens d'étanchéité entre ledit cylindre et le piston avec lequel il coopère car en l'état actuel de la technique, de tels moyens sont inexistants. Réaliser de tels moyens d'étanchéité figure parmi les objectifs du moteur thermique à transfert-détente et régénération selon l'invention. Ledit moteur prévoit ainsi de conférer à son cylindre de détente une bonne étanchéité et la résistance aux très hautes températures des turbines centrifuges.

Ainsi doté de cette première caractéristique indispensable, ledit moteur peut mettre en oeuvre l'équivalent d'un cycle de Brayton à régénération non plus avec des turbines et compresseurs centrifuges, mais avec des compresseurs et un cylindre de détente volumétriques à piston alternatif.

On remarque aussi que outre la réalisation d'un cylindre compatible avec les très hautes températures, le moteur thermique à transfert-détente et régénération selon l'invention propose de maîtriser le remplissage et la vidange dudit cylindre pour en exploiter au mieux les phases de transvasement et de détente productrices de travail.

Il résulte de l'invention un moteur thermique à transfert-détente et régénération :
- Dont les phases d'admission-compression, combustion et détente-échappement sont séparées, et sont confiées à des organes dédiés conçus et dimensionnés pour supporter leur charge mécanique et thermique spécifique, au plus proche du besoin ;
- Dont la chaleur résiduelle des gaz détendus est en grande partie recyclée pour produire du travail supplémentaire ce qui conduit à des pertes de chaleur minimales ;
- Dont la température des parois du cylindre de détente est voisine de celle des gaz chauds avant que ces derniers ne soient détendus, ce qui conduit à des pertes de chaleur minimales ;
- Dont les principaux composants ne nécessitent pas de refroidissement, ce qui conduit à des pertes de chaleur minimales;
- Dont le rapport bielle/manivelle n'a pas d'influence sur le rendement ;
- Dont le rapport volumétrique géométrique n'a pas de conséquence sur le rendement, ce dernier étant proche de celui produit par un rapport volumétrique infini ;
- Dont la combustion du mélange air-carburant peut s'opérer sur une large plage de richesse et de gros excès d'air par rapport à la stoechiométrie ;
- Dont la combustion est continue et n'est pas dépendante de la propagation d'un front de flamme dans l'espace tridimensionnel d'une chambre de combustion ;
- Dont la combustion - outre être continue et réalisée en excès d'air - est opérée à une température maximale plus faible que celle trouvée dans les moteurs thermique alternatifs conventionnels, cette conjonction de conditions de réalisation de ladite combustion permettant de produire peu de polluants à la source de sorte à réduire voire à éliminer le recours à un catalyseur d'oxydation, à un catalyseur trois-voies, ou à tout dispositif de post-traitement des oxydes d'azotes ou filtre à particules.
- Qui peut être à combustion interne ou externe, dans ce dernier cas la combustion pouvant être remplacée par une source de chaleur suffisamment intense d'origine solaire, nucléaire, ou de toute autre origine ;
- Qui peut consommer n'importe quel carburant liquide comme du gazole, de l'essence quelle qu'en soit la qualité, de l'éthanol ou tout type d'alcool, ou n'importe quel carburant gazeux comme du gaz de pétrole liquéfié, du méthane ou de l'hydrogène ;
- Qui, particulièrement s'il est à combustion externe, peut consommer du charbon, du bois ou tout déchet combustible solide ;
- Dont la plage de régime et de puissance sur laquelle est trouvé un rendement énergétique élevé est significativement plus large que celle des moteurs à turbines ;
- Dont la réactivité en transitoire de charge et/ou de régime est plus élevée que celle des moteurs à turbines ;
- Dont les émissions acoustiques et vibratoires sont plus faibles que celles des moteurs thermiques alternatifs à combustion interne conventionnels qu'ils soient à allumage commandé ou Diesel, du fait d'une pression maximale et d'un gradient de pression maximal trouvés dans son cylindre de détente qui sont très inférieurs à ceux trouvés dans les cylindres desdits moteurs conventionnels, et du fait d'une moindre pression des gaz de détente lorsqu'ils sont relâchés dans l'environnement ;
- Dont le rendement est peu tributaire de la cylindrée unitaire et dont la faisabilité et l'efficacité ne sont pratiquement dépendantes d'aucune dimension ou puissance haute ou basse ;
- Dont le rendement de conversion de la chaleur en travail est très supérieur à celui des moteurs à combustion interne alternatifs conventionnels quel qu'en soit le principe ce qui conduit, à même travail fourni, à une consommation de carburant plus basse que celle desdits moteurs conventionnels et à des éventuelles émissions de dioxyde de carbone associées également plus basses.

Il est entendu que le moteur thermique à transfert-détente et régénération selon l'invention est adaptable à toute machine ou appareil nécessitant une source motrice pour se déplacer et/ou se mouvoir comme une automobile, une motocyclette, un poids-lourd, une locomotive, un navire, un engin de chantier, de manutention, de levage ou militaire ou tout autre engin automobile. Le moteur thermique à transfert-détente et régénération selon l'invention peut aussi produire la puissance motrice nécessaire à des appareils stationnaires comme un générateur d'électricité, une pompe hydraulique ou toute machine industrielle ou à usage domestique qui nécessite une source de mouvement.

Ces exemples d'application du moteur thermique à transfert-détente et régénération selon l'invention sont donnés à titre non-limitatif.

Les autres caractéristiques de la présente invention ont été décrites dans la description et dans les revendications secondaires dépendantes directement ou indirectement de la revendication principale.

Le moteur thermique à transfert-détente et régénération suivant la présente invention comprend :
- Au moins un compresseur pouvant aspirer des gaz à une certaine pression via un conduit d'entrée de compresseur pour les refouler à une pression supérieure dans un conduit de sortie de compresseur ;
- Au moins un échangeur thermique de régénération constitué d'au moins un conduit haute-pression de régénération et d'au moins un conduit basse-pression de régénération, une première extrémité que comporte ledit conduit haute-pression étant reliée au conduit de sortie de compresseur tandis que les gaz circulants dans le conduit basse-pression de régénération peuvent céder une partie de leur chaleur aux gaz circulants dans le conduit haute-pression de régénération ;
- Au moins un conduit de sortie haute-pression de régénérateur qui comporte une première extrémité reliée à une deuxième extrémité que comprend le conduit haute-pression de régénération ;
- Au moins une source de chaleur placée en un endroit quelconque du conduit de sortie haute-pression de régénérateur et qui peut surchauffer des gaz qui circulent dans ledit conduit ;
- Au moins un cylindre détendeur dont une extrémité au moins est fermée par une culasse de cylindre détendeur intégrée audit cylindre ou rapportée sur ce dernier, ledit cylindre hébergeant un piston détendeur avec lequel il réalise une étanchéité pour former une chambre de transvasement-détente de volume variable, ledit piston pouvant se déplacer dans ledit cylindre et étant directement ou indirectement relié à un arbre de sortie de puissance par des moyens mécaniques de transmission de sorte à imprimer audit arbre un mouvement de rotation continue lorsque ledit piston effectue des mouvements de va-et-vient dans le cylindre détendeur ;
- Au moins un conduit d'admission des gaz chauds qui comporte une première extrémité reliée à une deuxième extrémité que comprend le conduit de sortie haute-pression de régénérateur, ledit conduit d'admission comprenant une deuxième extrémité qui traverse la culasse de cylindre détendeur pour déboucher dans le cylindre détendeur via une bouche de conduit d'admission des gaz chauds ;
- Au moins une soupape doseuse d'admission manoeuvrée par un actionneur de soupape doseuse, ladite soupape pouvant obturer ou ouvrir la bouche de conduit d'admission des gaz chauds ;
- Au moins un conduit d'échappement des gaz détendus qui comprend une première extrémité qui traverse la culasse de cylindre détendeur pour déboucher dans le cylindre détendeur via une bouche de conduit d'échappement des gaz détendus, ledit conduit d'échappement comprenant également une deuxième extrémité reliée à une première extrémité que comporte le conduit basse-pression de régénération ;
- Au moins une soupape d'échappement manoeuvrée par un actionneur de soupape d'échappement, ladite soupape pouvant obturer ou ouvrir la bouche de conduit d'échappement des gaz détendus ;
- Au moins un conduit de sortie de moteur placé dans le prolongement d'une deuxième extrémité que comporte le conduit basse-pression de régénération, ou confondu avec ladite deuxième extrémité pour ne constituer avec cette dernière qu'une seule et même pièce,
- Ledit piston détendeur (15) comportant des moyens d'étanchéité de piston (53) qui sont constitués :
   - D'au moins un anneau continu perforé (105) qui comporte une face cylindrique interne d'anneau (106), une face cylindrique externe d'anneau (107) et deux faces axiales d'anneau (108) ledit anneau (105) étant logé dans au moins une gorge d'anneau (109) aménagée dans le piston détendeur (15) tandis que ledit anneau (105) peut se mouvoir radialement dans la gorge d'anneau (109) sans pouvoir sortir de cette dernière ;
   - De moyens d'étanchéité d'anneau (110) qui réalisent une étanchéité entre chaque face axiale d'anneau (108) et la gorge d'anneau (109), de sorte que cette dernière définisse avec l'anneau continu perforé (105) une chambre de répartition de pression (119) raccordée par un circuit de transfert (114) à une source de fluide sous pression (112) ;
   - D'au moins un orifice calibré (111) qui traverse de part en part l'anneau continu perforé (105) dans son épaisseur radiale ;
   - D'au moins une surface de portance sur coussin d'air (116) que comporte l'anneau continu perforé (105), ladite surface de portance (116) étant disposée à l'opposé de la chambre de répartition de pression (119).

Le moteur thermique à transfert-détente et régénération suivant la présente invention comprend un compresseur qui est bi-étagé et qui est constitué d'un compresseur basse-pression dont la sortie est reliée à l'entrée d'un compresseur haute-pression via un refroidisseur intermédiaire de compresseur.

Le moteur thermique à transfert-détente et régénération suivant la présente invention comprend un arbre de sortie de puissance qui entraîne en rotation le compresseur.

Le moteur thermique à transfert-détente et régénération suivant la présente invention comprend un conduit d'entrée de compresseur qui comporte un injecteur d'eau qui peut pulvériser de l'eau liquide dans les gaz circulants dans ledit conduit avant que lesdits gaz ne soient introduits dans une chambre d'aspiration-refoulement que définit le compresseur qui les aspire.

Le moteur thermique à transfert-détente et régénération suivant la présente invention comprend un compresseur qui définit une chambre d'aspiration-refoulement dans laquelle débouche un injecteur d'eau, ce dernier pouvant pulvériser de l'eau liquide dans les gaz introduits dans ladite chambre après que lesdits gaz aient été aspirés via le conduit d'entrée de compresseur par ledit compresseur.

Le moteur thermique à transfert-détente et régénération suivant la présente invention comprend un conduit de sortie de compresseur qui comporte un séparateur air-eau.

Le moteur thermique à transfert-détente et régénération suivant la présente invention comprend un conduit de sortie de moteur qui comporte un sécheur de gaz à condensation.

Le moteur thermique à transfert-détente et régénération suivant la présente invention comprend un compresseur qui comporte une soupape doseuse d'admission de compresseur dont l'ouverture et la fermeture sont pilotées par un actionneur de soupape doseuse d'admission de compresseur, ladite soupape pouvant en s'ouvrant mettre en relation le conduit d'entrée de compresseur avec une chambre d'aspiration-refoulement que définit le compresseur.

Le moteur thermique à transfert-détente et régénération suivant la présente invention comprend conduit haute-pression de régénération et un conduit basse-pression de régénération qui sont accolés l'un à l'autre sur toute ou partie de leur longueur, le sens de la circulation des gaz contenus dans le conduit haute-pression de régénération étant inverse au sens de la circulation des gaz contenus dans le conduit basse-pression de régénération, les deux dits conduits constituant un échangeur thermique à contre-courant.

Le moteur thermique à transfert-détente et régénération suivant la présente invention comprend une source de chaleur qui est un brûleur constitué d'un injecteur de carburant et d'une chambre de combustion.

Le moteur thermique à transfert-détente et régénération suivant la présente invention comprend une source de chaleur qui est constituée d'un échangeur de chaleur primaire qui extrait de la chaleur d'une source universelle de chaleur pour transmettre ladite chaleur aux gaz circulant dans le conduit de sortie haute-pression de régénérateur directement, ou via un circuit secondaire de transport de chaleur.

Le moteur thermique à transfert-détente et régénération suivant la présente invention comprend une culasse de cylindre détendeur qui comporte un clapet d'équilibrage de pression qui obture ou non un conduit reliant la chambre de transvasement-détente et le conduit d'admission des gaz chauds, ledit clapet étant ouvert si la pression qui règne dans chambre de transvasement-détente est supérieure à celle régnant dans le conduit d'admission des gaz chauds de sorte que les gaz passent de ladite chambre audit conduit, ledit clapet étant sinon fermé de sorte que lesdits gaz ne peuvent pas passer dudit conduit à ladite chambre via ledit clapet.

Le moteur thermique à transfert-détente et régénération suivant la présente invention comprend une chambre de transvasement-détente qui comporte au moins un injecteur de carburant de maintien en température.

Le moteur thermique à transfert-détente et régénération suivant la présente invention comprend une chambre de transvasement-détente qui comporte au moins un injecteur d'eau anti-NOx.

Le moteur thermique à transfert-détente et régénération suivant la présente invention comprend piston détendeur qui est raccordé aux moyens mécaniques de transmission par une tige de piston détendeur qui traverse la culasse de cylindre détendeur, une étanchéité étant réalisée entre ladite tige et ladite culasse par des moyens d'étanchéité de tige.

Le moteur thermique à transfert-détente et régénération suivant la présente invention comprend des moyens d'étanchéité de tige qui comprennent une étanchéité supérieure de tige et une étanchéité inférieure de tige suffisamment éloignées l'une de l'autre pour former - entre les deux dites étanchéités - une chambre à circulation d'huile dans laquelle débouche un conduit d'amenée d'huile de refroidissement-lubrification et de laquelle repart un conduit de sortie d'huile de refroidissement-lubrification.

Le moteur thermique à transfert-détente et régénération suivant la présente invention comprend des moyens d'étanchéité de tige qui coopèrent avec une bague de guidage de tige logée à l'intérieur ou en dehors de la chambre à circulation d'huile.

Le moteur thermique à transfert-détente et régénération suivant la présente invention comprend des moyens mécaniques de transmission qui sont constitués d'une bielle dont l'une des extrémités s'articule directement ou indirectement dans le piston détendeur et dont l'autre extrémité s'articule autour d'une manivelle solidaire de l'arbre de sortie de puissance.

Le moteur thermique à transfert-détente et régénération suivant la présente invention comprend une soupape doseuse d'admission et/ou la soupape d'échappement qui est guidée directement ou indirectement dans une cage de soupape logée dans la culasse de cylindre détendeur, ladite cage comportant un siège sur lequel peut reposer ladite soupape pour constituer une étanchéité tandis que ledit siège et/ou la partie de la cage de soupape qui guide ladite soupape est refroidi par un circuit de refroidissement de soupape dans lequel circule un fluide caloporteur.

Le moteur thermique à transfert-détente et régénération suivant la présente invention comporte des moyens d'étanchéité de piston qui comprennent au moins un évidement de contrepression axialement non-débouchant et aménagé en creux sur la face cylindrique externe d'anneau, de manière que la surface de la face cylindrique externe d'anneau non-occupée par ledit évidemment constitue la surface de portance sur coussin d'air.

Le moteur thermique à transfert-détente et régénération suivant la présente invention comporte des moyens d'étanchéité de piston qui comprennent un évidement de contrepression qui est constitué d'une gorge de contrepression de faible profondeur plus ou moins centrée sur la longueur axiale de la face cylindrique externe d'anneau, ladite gorge de contrepression étant réalisée sur toute la circonférence de ladite face cylindrique externe d'anneau.

Le moteur thermique à transfert-détente et régénération suivant la présente invention comporte un orifice calibré débouchant dans ledit évidement de contrepression.

Le moteur thermique à transfert-détente et régénération suivant la présente invention comprend un orifice calibré qui débouche dans l'évidement de contrepression par l'intermédiaire d'un évidement de distribution de pression aménagé en creux au fond dudit évidement de contrepression.

Le moteur thermique à transfert-détente et régénération suivant la présente invention comprend un évidement de distribution de pression qui est constitué d'une gorge de distribution de pression plus ou moins centrée sur la longueur axiale de la face cylindrique externe d'anneau, ladite gorge de distribution de pression étant réalisée sur toute la circonférence de ladite face cylindrique externe d'anneau.

Le moteur thermique à transfert-détente et régénération suivant la présente invention comprend au moins l'un des deux bords axiaux de la face cylindrique externe d'anneau ou de la face cylindrique interne d'anneau qui reçoit l'évidement de contrepression qui se termine par une dépouille de placage de bord.

Le moteur thermique à transfert-détente et régénération suivant la présente invention comprend des moyens d'étanchéité d'anneau qui sont constitués d'une lèvre d'étanchéité d'anneau qui est solidaire de l'anneau continu perforé d'une part, et qui établit un contact étanche avec l'intérieur ou le rebord de la gorge d'anneau d'autre part.

Le moteur thermique à transfert-détente et régénération suivant la présente invention comprend des moyens d'étanchéité d'anneau qui sont constitués d'une portion axiale désépaissie aménagée au voisinage de l'une au moins des extrémités axiales de l'anneau continu perforé, ladite portion étant solidaire de la gorge d'anneau de façon étanche, et étant suffisamment souple pour permettre au diamètre de l'anneau continu perforé d'augmenter ou de diminuer par rapport à celui de ladite gorge.

Le moteur thermique à transfert-détente et régénération suivant la présente invention comprend un anneau continu perforé qui est constitué d'un matériau souple et qui comprend au moins un ressort circonférentiel d'anneau qui tend à réduire le diamètre dudit anneau.

Le moteur thermique à transfert-détente et régénération suivant la présente invention comprend une chambre de répartition de pression qui héberge des moyens de diffusion de fluide d'anneau qui forcent le fluide d'anneau en provenance du circuit de transfert de pression à lécher la plus grande surface possible de la face cylindrique interne d'anneau avant de s'échapper via l'orifice calibré.

Le moteur thermique à transfert-détente et régénération suivant la présente invention comprend des moyens de diffusion de fluide d'anneau qui sont constitués d'une plaque de diffusion logée au fond de la gorge d'anneau, l'une au moins des extrémités axiales de ladite plaque étant munie d'au moins un orifice ou gorge latérale de plaque de diffusion qui force le fluide d'anneau provenant du circuit de transfert de pression à déboucher dans la chambre de répartition de pression par l'une au moins de ses extrémités axiales.

Le moteur thermique à transfert-détente et régénération suivant la présente invention comprend une gorge d'anneau qui présente une butée radiale d'anneau qui limite la pénétration de l'anneau continu perforé dans ladite gorge.

Le moteur thermique à transfert-détente et régénération suivant la présente invention comprend un circuit de transfert de pression qui est constitué d'un tube d'arrivée de pression parallèle au cylindre détendeur et solidaire du piston détendeur, une première extrémité dudit tube débouchant à l'intérieur dudit piston tandis que la deuxième extrémité dudit tube débouche, via un alésage de chambre de pression dans lequel il peut translater longitudinalement et de façon étanche, dans une chambre de pression reliée à la source de fluide sous pression.

Le moteur thermique à transfert-détente et régénération suivant la présente invention comprend un tube d'arrivée de pression qui est relié à la chambre de répartition de pression par au moins un conduit radial d'arrivée de pression.

Le moteur thermique à transfert-détente et régénération suivant la présente invention comprend une chambre de pression qui est reliée à la source de fluide sous pression via un clapet anti-retour de pression proportionnelle qui permet au fluide d'anneau d'aller de ladite source à ladite chambre, mais non d'aller de ladite chambre à ladite source.

Le moteur thermique à transfert-détente et régénération suivant la présente invention comprend une gorge d'anneau qui héberge un ressort d'expansion qui prend appui sur ladite gorge pour exercer un effort radial sur la face cylindrique interne d'anneau.

Le moteur thermique à transfert-détente et régénération suivant la présente invention comprend un ressort d'expansion qui réalise par contact une étanchéité entre la gorge d'anneau et l'anneau continu perforé.

Le moteur thermique à transfert-détente et régénération suivant la présente invention comprend un ressort d'expansion qui est muni d'au moins un orifice de diffusion de fluide et/ou d'au moins une gorge de diffusion de fluide de sorte à constituer avec ledit orifice et/ou ladite gorge les moyens de diffusion de fluide d'anneau.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

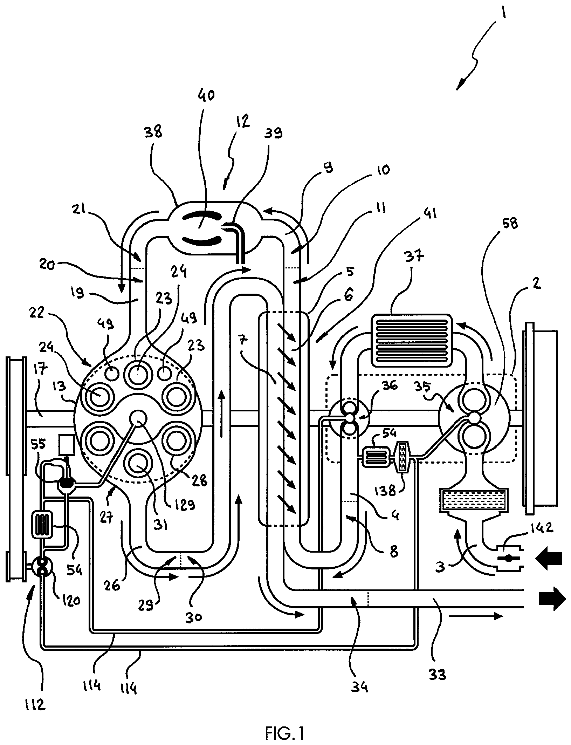

Figure 1 est une représentation schématique du moteur thermique à transfert-détente et régénération suivant l'invention vu de dessus, le compresseur comprenant un compresseur basse-pression, un compresseur haute-pression et un refroidisseur intermédiaire de compresseur, tandis que la source de chaleur est constituée d'un brûleur et que les moyens d'étanchéité de piston sont notamment constitués d'un anneau continu perforé.

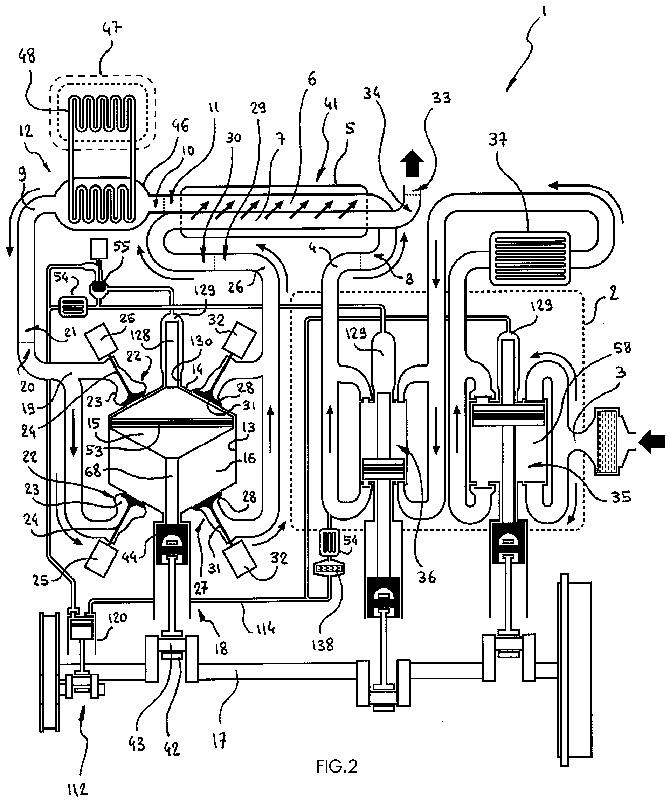

Figure 2 est une représentation schématique du moteur thermique à transfert-détente et régénération suivant l'invention en vue latérale, le compresseur comprenant un compresseur basse-pression, un compresseur haute-pression et un refroidisseur intermédiaire de compresseur, tandis que la source de chaleur est constituée d'un échangeur de chaleur primaire qui extrait de la chaleur d'une source universelle de chaleur et que les moyens d'étanchéité de piston sont notamment constitués d'un anneau continu perforé.

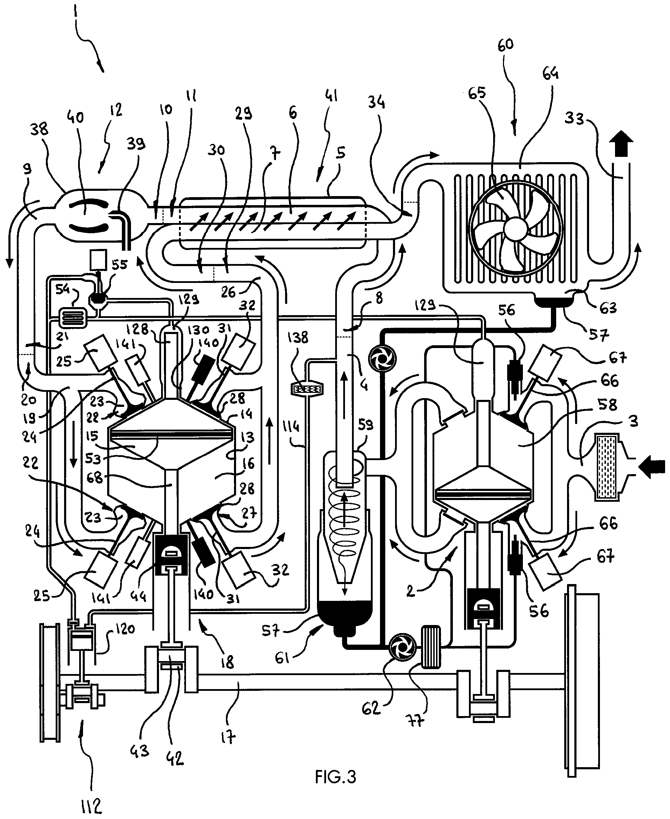

Figure 3 est une représentation schématique en vue latérale du moteur thermique à transfert-détente et régénération suivant l'invention, le compresseur étant mono étagé, à piston à double effet, muni de soupapes doseuses d'admission de compresseur mues par un actionneur de soupape doseuse d'admission de compresseur, et coopérant avec un injecteur d'eau qui pulvérise de l'eau liquide dans les gaz circulants dans le conduit d'entrée de compresseur, ladite eau étant ensuite récupérée par un séparateur air-eau, puis par un sécheur de gaz à condensation.

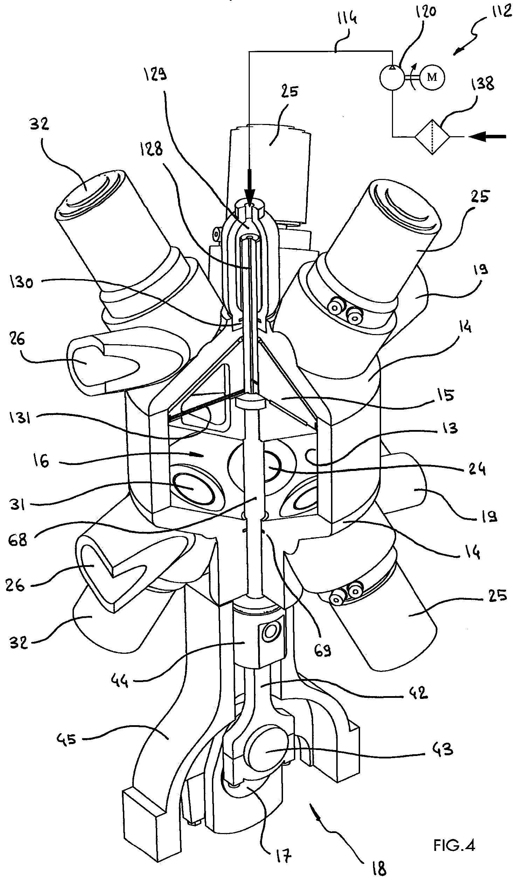

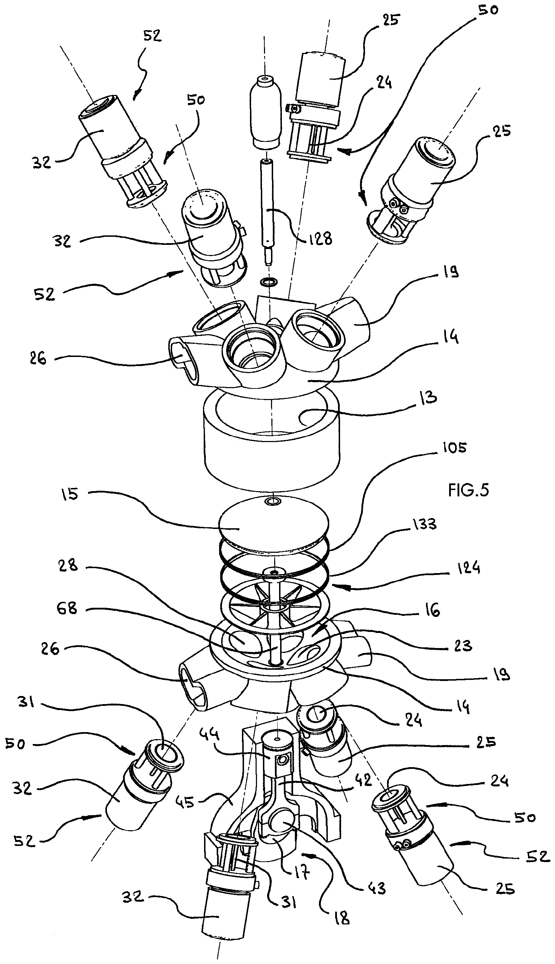

Figures 4 et 5 sont respectivement une vue tridimensionnelle en écorché et une vue tridimensionnelle éclatée d'une partie du moteur thermique à transfert-détente et régénération suivant l'invention lorsque les moyens d'étanchéité de piston sont notamment constitués d'un anneau continu perforé, ladite partie incluant notamment des moyens mécaniques de transmission et un cylindre détendeur définissant avec le piston détendeur avec lequel il coopère deux chambres de transvasement-détente chacune fermée par une culasse de cylindre détendeur.

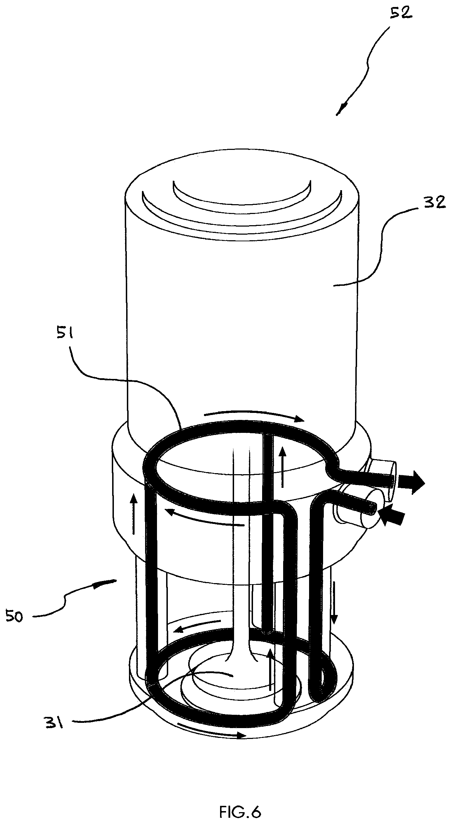

Figure 6 est une vue tridimensionnelle fantôme d'une soupape d'échappement du moteur thermique à transfert-détente et régénération suivant l'invention dont le siège et la partie d'une cage de soupape qui guide ladite soupape sont refroidis par un circuit de refroidissement de soupape.

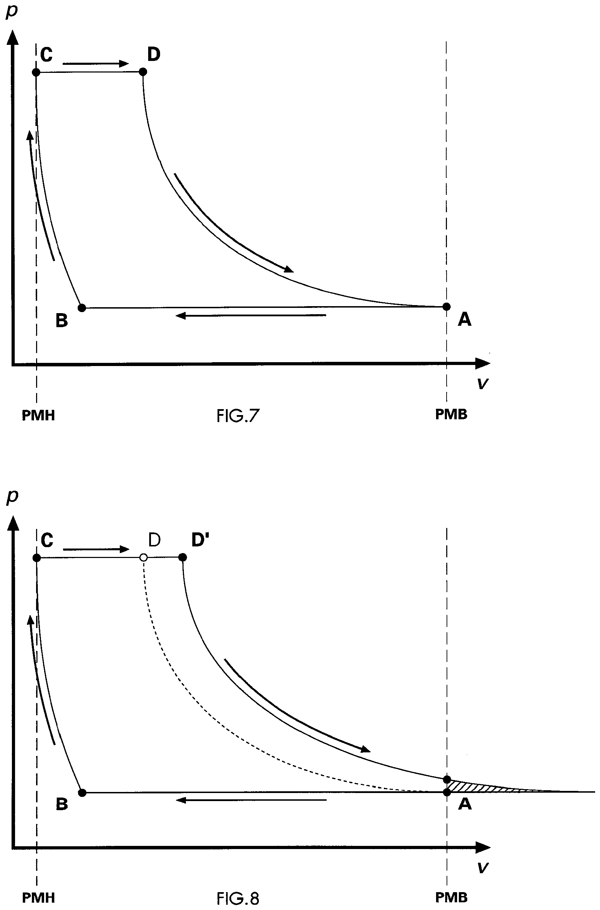

Figure 7 est un diagramme pression-volume qui représente de façon schématique le cycle opéré dans la chambre de transvasement-détente du moteur thermique à transfert-détente et régénération suivant l'invention.
Figure 8 est un diagramme pression-volume qui représente de façon schématique le cycle tel qu'il peut être opéré dans la chambre de transvasement-détente du moteur thermique à transfert-détente et régénération suivant l'invention dans l'objectif de maximiser le couple dudit moteur.

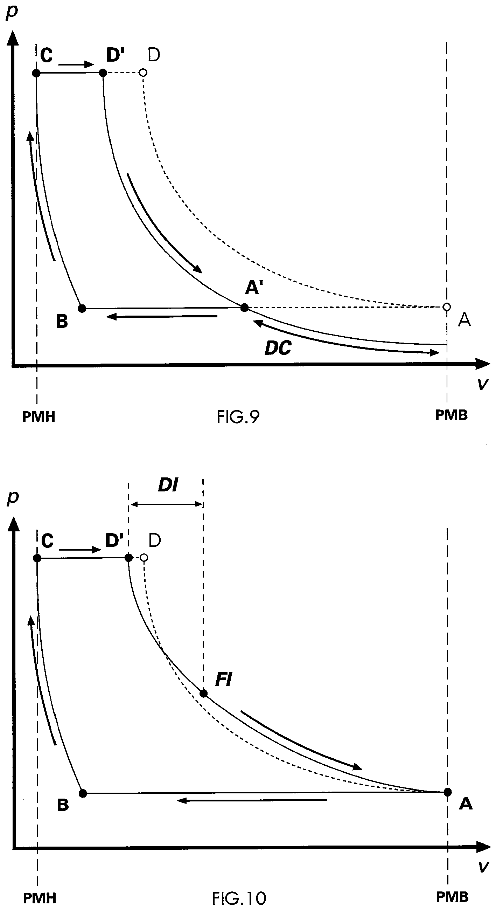

Figure 9 est un diagramme pression-volume qui représente de façon schématique le cycle tel qu'il peut être opéré dans la chambre de transvasement-détente du moteur thermique à transfert-détente et régénération suivant l'invention dans l'objectif de réduire le couple dudit moteur.
Figure 10 est un diagramme pression-volume qui représente de façon schématique le cycle tel qu'il peut être opéré dans la chambre de transvasement-détente du moteur thermique à transfert-détente et régénération suivant l'invention dans l'objectif de maximiser le rendement dudit moteur au moyen d'un injecteur de carburant de maintien en température.

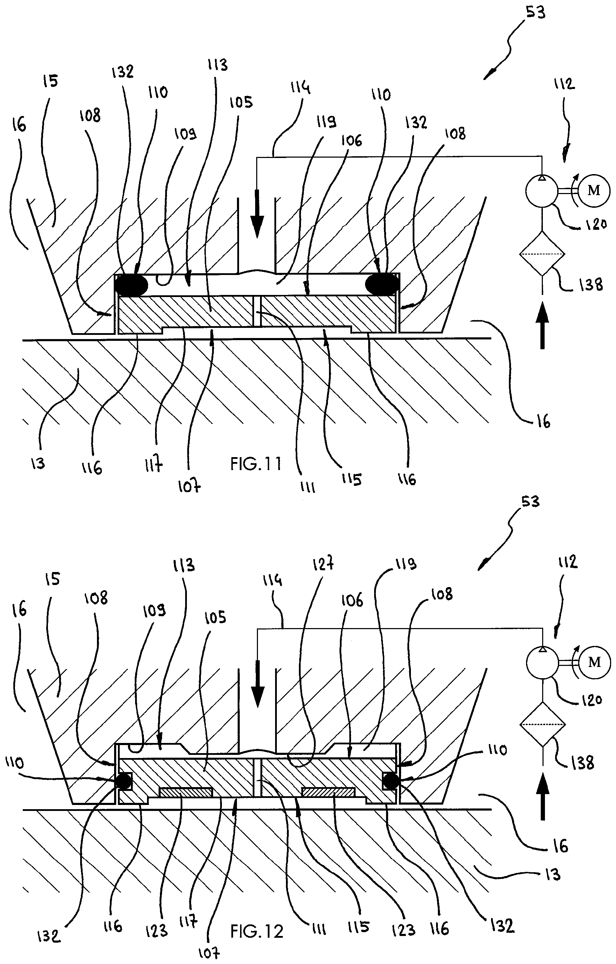

Figure 11 est une vue en coupe schématique des moyens d'étanchéité de piston du moteur thermique à transfert-détente et régénération selon l'invention lorsqu'ils sont notamment constitués d'un anneau continu perforé, les moyens d'étanchéité d'anneau étant constitués d'un joint torique.
Figure 12 est une vue en coupe schématique des moyens d'étanchéité de piston du moteur thermique à transfert-détente et régénération selon l'invention lorsqu'ils sont notamment constitués d'un anneau continu perforé, la gorge d'anneau présentant une butée radiale d'anneau qui limite la pénétration de l'anneau continu perforé dans ladite gorge tandis que ledit l'anneau est constitué d'un matériau souple et comprend un ressort circonférentiel d'anneau.

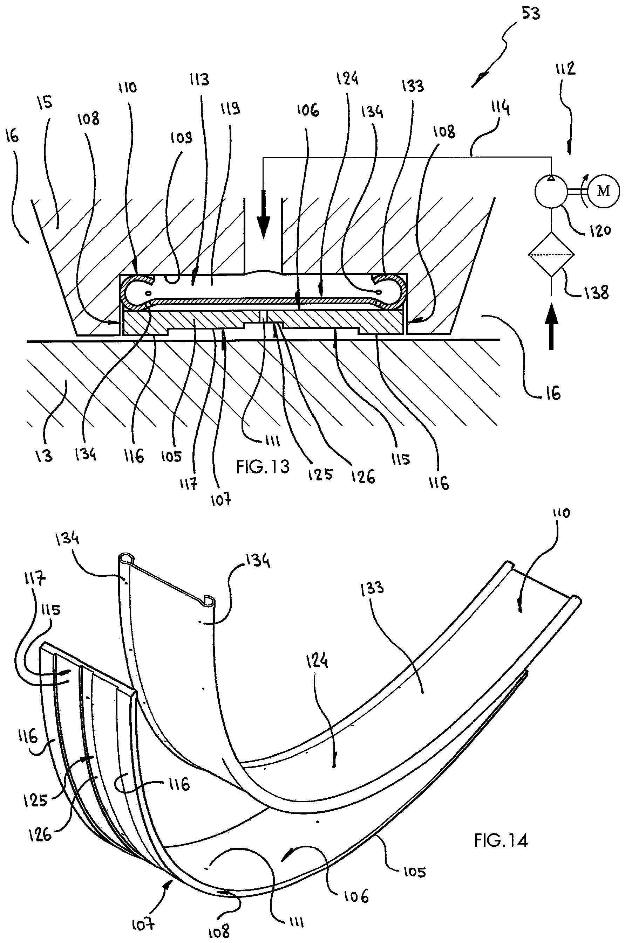

Figures 13 et 14 sont respectivement une coupe schématique et une vue tridimensionnelle éclatée des moyens d'étanchéité de piston du moteur thermique à transfert-détente et régénération selon l'invention lorsqu'ils sont notamment constitués d'un anneau continu perforé, la gorge d'anneau hébergeant un ressort d'expansion qui réalise par contact une étanchéité entre la gorge d'anneau et l'anneau continu perforé, ledit ressort étant en outre muni d'orifices de diffusion de fluide afin de constituer des moyens de diffusion de fluide d'anneau.

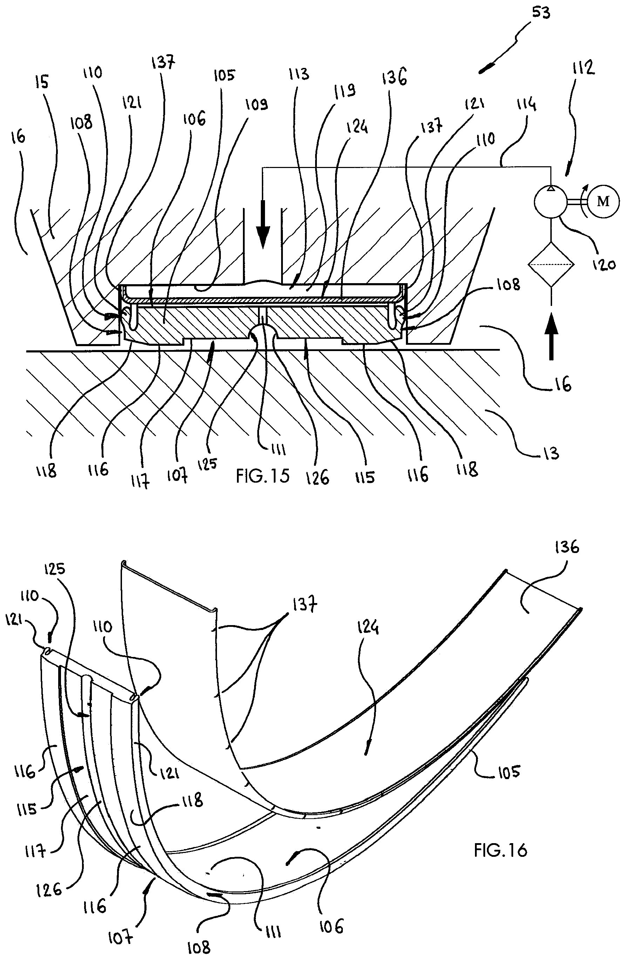

Figures 15 et 16 sont respectivement une coupe schématique et une vue tridimensionnelle éclatée des moyens d'étanchéité de piston du moteur thermique à transfert-détente et régénération selon l'invention lorsqu'ils sont notamment constitués d'un anneau continu perforé, une plaque de diffusion munie de gorges latérales de plaque de diffusion étant logée au fond de la gorge d'anneau tandis qu'une lèvre d'étanchéité d'anneau solidaire de l'anneau continu perforé constitue les moyens d'étanchéité d'anneau, et que l'anneau continu perforé comporte des dépouilles de placage de bord.

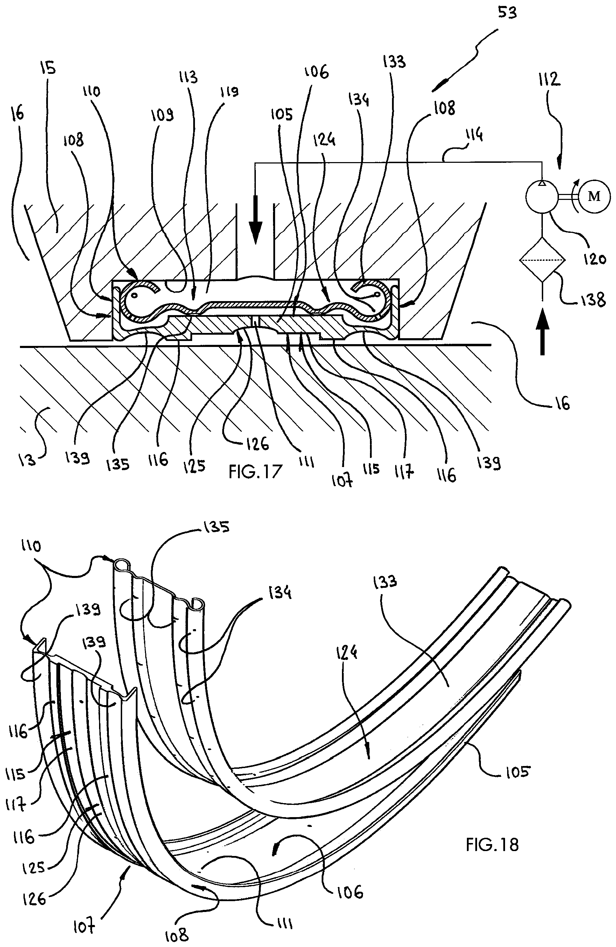

Figures 17 et 18 sont respectivement une coupe schématique et une vue tridimensionnelle éclatée des moyens d'étanchéité de piston du moteur thermique à transfert-détente et régénération selon l'invention lorsqu'ils sont notamment constitués d'un anneau continu perforé, la gorge d'anneau hébergeant un ressort d'expansion muni d'orifices de diffusion de fluide et de gorges de diffusion de fluide afin de constituer des moyens de diffusion de fluide d'anneau tandis que les moyens d'étanchéité d'anneau sont constitués de portion axiales désépaissies aménagées au voisinage des extrémités axiales de l'anneau continu perforé.

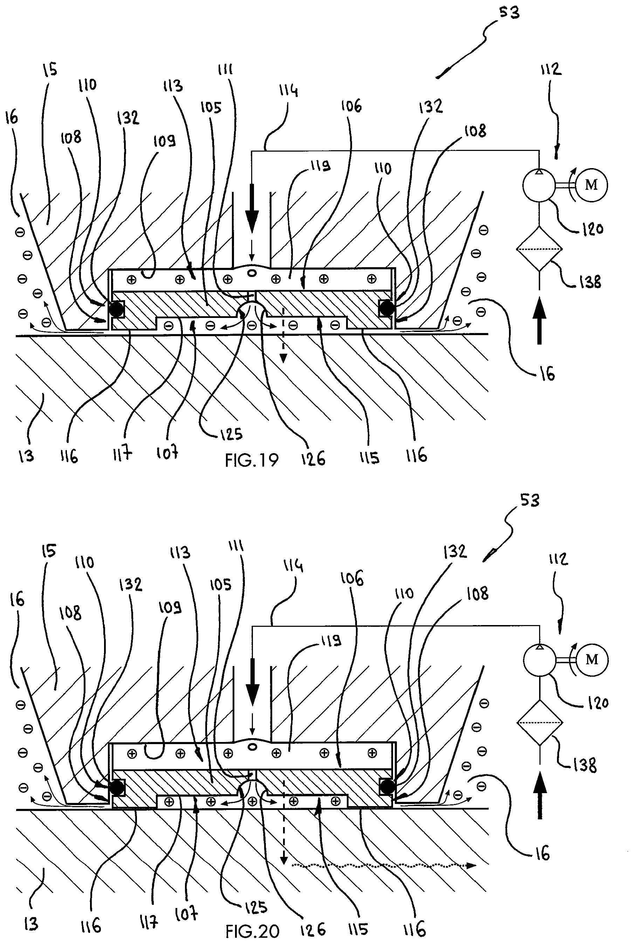

Figures 19 et 20 sont des vues en coupe schématique qui illustrent le fonctionnement des moyens d'étanchéité de piston du moteur thermique à transfert-détente et régénération selon l'invention lorsqu'ils sont notamment constitués d'un anneau continu perforé, les moyens d'étanchéité d'anneau étant constitués d'un joint torique.

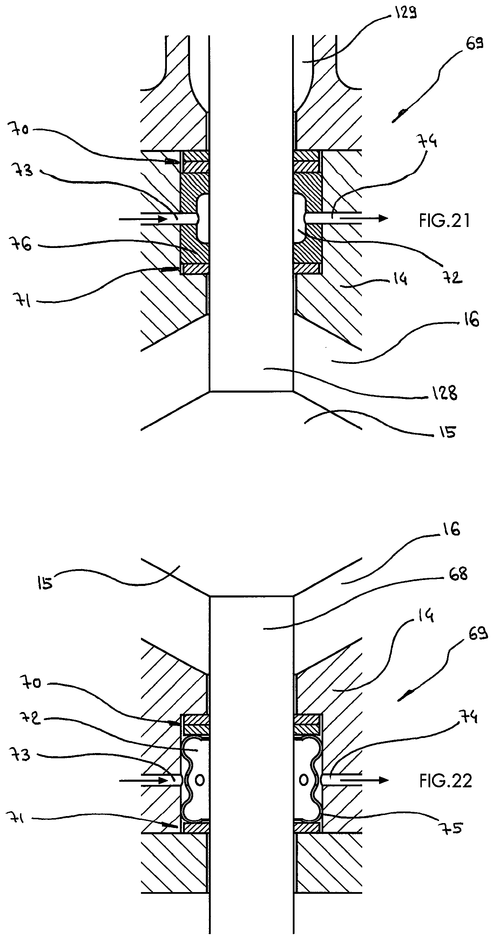

Figure 21 est une vue en coupe schématique des moyens d'étanchéité de tige du moteur thermique à transfert-détente et régénération selon l'invention lorsqu'ils s'appliquent au tube d'amenée de pression et qu'ils sont notamment constitués d'une étanchéité supérieure de tige, d'une étanchéité inférieure de tige, d'une chambre à circulation d'huile, et d'une bague de guidage de tige.
Figure 22 est une vue en coupe schématique des moyens d'étanchéité de tige du moteur thermique à transfert-détente et régénération selon l'invention lorsqu'ils s'appliquent à la tige de piston détendeur et qu'ils sont notamment constitués d'une étanchéité supérieure de tige, d'une étanchéité inférieure de tige, d'une chambre à circulation d'huile, et d'un ressort écarteur de segments.

### DESCRIPTION DE L'INVENTION :

On a montré en figures 1 à 22 le moteur thermique à transfert-détente et régénération 1, divers détails de ses composants, ses variantes, et ses accessoires.

Comme le montrent clairement les figures 1 à 3, le moteur thermique à transfert-détente et régénération 1 comprend au moins un compresseur 2 pouvant aspirer des gaz à une certaine pression via un conduit d'entrée de compresseur 3 pour les refouler à une pression supérieure dans un conduit de sortie de compresseur 4, ledit compresseur 2 pouvant être centrifuge, volumétrique rotatif à palettes, à vis ou à lobes, ou volumétrique alternatif à piston(s), ou de tout type connu de l'homme de l'art.

On note que si le compresseur 2 est alternatif à piston, son clapet d'admission peut avantageusement être remplacé par une soupape doseuse d'admission de compresseur 66 dont l'ouverture et/ou la fermeture est(sont) pilotée(s) par un actionneur de soupape doseuse d'admission de compresseur 67. Selon cette configuration, la quantité d'air admise par le compresseur 2 peut être réglée par ledit actionneur 67 soit durant la course d'admission dudit compresseur 2 la fermeture de ladite soupape doseuse 66 étant plus ou moins précoce, soit durant la course de compression dudit compresseur 2 la fermeture de ladite soupape doseuse 66 étant plus ou moins tardive.

On voit aussi en figures 1 à 3 que le moteur thermique à transfert-détente et régénération 1 selon l'invention comprend au moins un échangeur thermique de régénération 5 constitué d'au moins un conduit haute-pression de régénération 6 et d'au moins un conduit basse-pression de régénération 7, une première extrémité 8 que comporte ledit conduit haute-pression 6 étant reliée au conduit de sortie de compresseur 4 tandis que les gaz circulants dans le conduit basse-pression de régénération 7 peuvent céder une partie de leur chaleur aux gaz circulants dans le conduit haute-pression de régénération 6. On note d'ailleurs que l'intérieur du conduit basse-pression de régénération 7 peut être revêtu de métaux précieux comme le platine, le palladium ou le rhodium dont les propriétés catalytiques favorisent l'oxydation d'hydrocarbures que peuvent contenir les gaz circulants dans ledit conduit basse-pression 7.

Ledit moteur thermique à transfert-détente et régénération 1 comprend aussi au moins un conduit de sortie haute-pression de régénérateur 9 qui comporte une première extrémité 10 reliée à une deuxième extrémité 11 que comprend le conduit haute-pression de régénération 6 ;
On remarque aussi en figures 1 à 3 que le moteur thermique à transfert-détente et régénération 1 selon l'invention comprend au moins une source de chaleur 12 placée en un endroit quelconque du conduit de sortie haute-pression de régénérateur 9 et qui peut surchauffer des gaz qui circulent dans ledit conduit 9.

Les figures 1 à 5 montrent également que le moteur thermique à transfert-détente et régénération 1 selon l'invention comprend en outre au moins un cylindre détendeur 13 dont une extrémité au moins est fermée par une culasse de cylindre détendeur 14 intégrée audit cylindre 13 ou rapportée sur ce dernier, ledit cylindre 13 hébergeant un piston détendeur 15 avec lequel il réalise une étanchéité pour former une chambre de transvasement-détente 16 de volume variable, ledit piston 15 pouvant se déplacer dans ledit cylindre 13 et étant directement ou indirectement relié à un arbre de sortie de puissance 17 par des moyens mécaniques de transmission 18 de sorte à imprimer audit arbre 17 un mouvement de rotation continue lorsque ledit piston 15 effectue des mouvements de va-et-vient dans le cylindre détendeur 13.

Selon le cas, les moyens mécaniques de transmission 18 peuvent être logés dans un carter de moteur 45 et coopérer avec des moyens électriques, pneumatiques ou hydrauliques de transmission de puissance qui peuvent s'intercaler entre lesdits moyens mécaniques 18 et le piston détendeur 15. A titre d'exemple, le piston détendeur 15 peut directement actionner le piston d'une pompe hydraulique pour fournir un débit d'huile sous pression utilisable par un moteur hydraulique ou toute autre machine hydraulique.

On note qu'à titre de variante illustrée en figures 2 à 5, le cylindre détendeur 13 peut définir avec le piston détendeur 15 deux chambres de transvasement-détente 16. Selon cette configuration, les deux extrémités du cylindre détendeur 13 sont fermées par une culasse de cylindre détendeur 14, celle qui est placée du coté des moyens mécaniques de transmission 18 étant traversée par un orifice au travers duquel passe une partie au moins desdits moyens 18 ou d'éventuels organes annexes avec lesquels coopèrent lesdits moyens 18. On note également que le cylindre détendeur 13, la culasse de cylindre détendeur 14 et le piston détendeur 15 peuvent être réalisés dans un matériau résistant aux très hautes températures de l'ordre de mille degrés Celsius et plus, comme la céramique à base d'alumine, de zircone ou de carbure de silicium.

Au vu des figures 1 à 3 on constate également que le moteur thermique à transfert-détente et régénération 1 selon l'invention comprend au moins un conduit d'admission des gaz chauds 19 qui comporte une première extrémité 20 reliée à une deuxième extrémité 21 que comprend le conduit de sortie haute-pression de régénérateur 9, ledit conduit d'admission 19 comprenant une deuxième extrémité 22 qui traverse la culasse de cylindre détendeur 14 pour déboucher dans le cylindre détendeur 13 via une bouche de conduit d'admission des gaz chauds 23.

Les figures 1 à 5 montrent que le moteur thermique à transfert-détente et régénération 1 selon l'invention comprend aussi au moins une soupape doseuse d'admission 24 manoeuvrée par un actionneur de soupape doseuse 25, ladite soupape 24 pouvant obturer ou ouvrir la bouche de conduit d'admission des gaz chauds 23 tandis que l'actionneur de soupape doseuse 25 peut être piloté par un calculateur qui contrôle le moment où s'ouvre et/ou se ferme la soupape doseuse d'admission 24 en fonction de la position relative du piston détendeur 15 par rapport au cylindre détendeur 13 et au sens de déplacement dudit piston 15, ledit calculateur pouvant aussi possiblement contrôler la hauteur de levée de ladite soupape 24. On note que l'actionneur de soupape doseuse 25 peut être mécanique à ressort de rappel ou desmodromique, électrique, électromécanique, hydraulique, hydromécanique, pneumatique, hydropneumatique ou de manière générale, de tout type connu de l'homme de l'art.

Sur les figures 1 à 5 on voit également que le moteur thermique à transfert-détente et régénération 1 selon l'invention comprend aussi au moins un conduit d'échappement des gaz détendus 26 qui comprend une première extrémité 27 qui traverse la culasse de cylindre détendeur 14 pour déboucher dans le cylindre détendeur 13 via une bouche de conduit d'échappement des gaz détendus 28, ledit conduit d'échappement 26 comprenant également une deuxième extrémité 29 reliée à une première extrémité 30 que comporte le conduit basse-pression de régénération 7.

C'est sur les figures 1 à 6 que l'on constate que le moteur thermique à transfert-détente et régénération 1 selon l'invention comprend au moins une soupape d'échappement 31 manoeuvrée par un actionneur de soupape d'échappement 32, ladite soupape 31 pouvant obturer ou ouvrir la bouche de conduit d'échappement des gaz détendus 28 cependant que l'actionneur de soupape d'échappement 32 peut être piloté par un calculateur qui contrôle le moment où s'ouvre et/ou se ferme la soupape d'échappement 31 en fonction de la position relative du piston détendeur 15 par rapport au cylindre détendeur 13 et au sens de déplacement dudit piston 15, ledit calculateur pouvant aussi possiblement contrôler la hauteur de levée de ladite soupape 31. On note que l'actionneur de soupape d'échappement 32 peut être mécanique à ressort de rappel ou desmodromique, électrique, électromécanique, hydraulique, hydromécanique, pneumatique, hydropneumatique ou de manière générale, de tout type connu de l'homme de l'art.

On remarque que selon le mode de réalisation choisi pour le moteur thermique à transfert-détente et régénération 1 selon l'invention, la soupape doseuse d'admission 24 et/ou la soupape d'échappement 31 peut être pleine ou creuse. En ce dernier cas, ladite soupape 24, 31 peut contenir ou non un liquide ou des sels caloporteurs. Ladite soupape 24, 31 peut en outre être faite d'une ou plusieurs pièces d'acier quelle qu'en soit la nuance et/ou en céramique armée ou non. Si ladite soupape 24, 31 est creuse, elle peut être conçue la plus légère possible, c'est à dire faite d'une épaisseur d'acier aux limites de l'admissible par la rigidité et la longévité de ladite soupape 24, 31.

Enfin, comme on le voit sur les figures 1 à 3, le moteur thermique à transfert-détente et régénération 1 selon l'invention comprend au moins un conduit de sortie de moteur 33 placé dans le prolongement d'une deuxième extrémité 34 que comporte le conduit basse-pression de régénération 7, ou confondu avec ladite deuxième extrémité 34 pour ne constituer avec cette dernière qu'une seule et même pièce.

On note que si le moteur thermique à transfert-détente et régénération 1 suivant l'invention comporte au moins un compresseur 2 alternatif à piston(s), le ou les cylindre(s) détendeur(s) 13 et ledit compresseur 2 que comprend ledit moteur 1 peuvent être reliés au même arbre de sortie de puissance 17 et être disposés autour de ce dernier en ligne, en « V », à plat, en étoile ou selon toute architecture applicable aux moteurs ou compresseurs alternatifs à pistons conventionnels, de sorte à optimiser l'encombrement, les proportions ou les émissions vibratoires dudit moteur thermique à transfert-détente et régénération 1.

Comme l'illustrent les figures 1 et 2, le compresseur 2 du moteur thermique à transfert-détente et régénération 1 selon l'invention peut être bi-étagé et être constitué d'un compresseur basse-pression 35 dont la sortie est reliée à l'entrée d'un compresseur haute-pression 36 via un refroidisseur intermédiaire de compresseur 37 connu en soi qui refroidit les gaz sortant du compresseur basse-pression 35 en-en dissipant la chaleur dans l'atmosphère ou dans tout autre milieu plus froid que lesdits gaz et avant que ces dernier ne soient admis à l'entrée du compresseur haute-pression 36. On note à ce titre que si le compresseur basse-pression 35 est à piston alternatif, son cylindre au moins peut être refroidi par air pour par eau.

Les figures 1 à 3 montrent également que l'arbre de sortie de puissance 17 peut - selon un mode particulier de réalisation du moteur thermique à transfert-détente et régénération 1 selon l'invention - entraîner en rotation le compresseur 2. On note que ceci peut s'opérer directement ou par l'intermédiaire d'une transmission à plusieurs rapports ou continûment variable.

Comme le montre la figure 3, le conduit d'entrée de compresseur 3 peut comporter un injecteur d'eau 56 qui peut pulvériser de l'eau liquide 57 dans les gaz circulants dans ledit conduit 3 avant que lesdits gaz ne soient introduits dans une chambre d'aspiration-refoulement 58 que définit le compresseur 2 qui les aspire, l'injecteur d'eau 56 pouvant être de tout type connu de l'homme de l'art et pouvant être alimenté en eau liquide 57 par une pompe à eau 62 ou en tout autre liquide comme de l'huile ou d'autres hydrocarbures par une pompe à liquide quel qu'en soit le type.

A titre d'autre variante, on note que le compresseur 2 peut définir une chambre d'aspiration-refoulement 58 dans laquelle débouche un injecteur d'eau 56, ce dernier pouvant pulvériser de l'eau liquide 57 dans les gaz introduits dans ladite chambre 58 après que lesdits gaz aient été aspirés via le conduit d'entrée de compresseur 3 par ledit compresseur 2. On remarquera que l'injecteur d'eau 56 peut être de tout type connu de l'homme de l'art et qu'il peut être alimenté en eau liquide 57 par une pompe à eau 62 ou en tout autre liquide comme de l'huile ou d'autres hydrocarbures par une pompe à liquide quel qu'en soit le type.

Dans la mesure ou un injecteur d'eau 56 est prévu, la figure 3 montre que le conduit de sortie de compresseur 4 peut comporter un séparateur air-eau 59 qui récupère de l'eau liquide 57 présente dans les gaz qui ont été refoulés par le compresseur 2 dans ledit conduit de sortie 4, et qui stocke ladite eau 57 dans un réservoir de récupération d'eau liquide 61. On note que le séparateur air-eau 59 peut être par exemple de type centrifuge ou cyclonique, ou de tout autre type connu de l'homme de l'art.

Selon une autre variante du moteur thermique à transfert-détente et régénération 1 selon l'invention toujours montrée en figure 3, le conduit de sortie de moteur 33 peut comporter un sécheur de gaz à condensation 60 dans lequel passent les gaz sortant du conduit basse-pression de régénération 7, ledit sécheur 60 comportant des parois internes maintenues à relativement basse température par toute source froide possible de sorte que lorsque lesdits gaz lèchent lesdites parois ils se refroidissent, une grande partie de la vapeur que contiennent lesdits gaz se condensant alors pour se transformer en eau liquide 57 qui ruissèle le long desdites parois pour être récupérée dans un bac à condensats 63.

On note que si la source froide est l'air ambiant atmosphérique, le sécheur de gaz à condensation 60 peut être principalement constitué d'un échangeur air/air de condensation 64 qui intègre le bac à condensats 63 ou qui est relié à ce dernier, tandis que ledit air ambiant peut être forcé à passer au travers dudit échangeur 64 par un ventilateur d'échangeur de condensation 65.

La figure 3 illustre également que le compresseur 2 peut comporter une soupape doseuse d'admission de compresseur 66 dont l'ouverture et la fermeture sont pilotées par un actionneur de soupape doseuse d'admission de compresseur 67, ladite soupape 66 pouvant en s'ouvrant mettre en relation le conduit d'entrée de compresseur 3 avec une chambre d'aspiration-refoulement 58 que définit le compresseur 2.

Selon cette configuration particulière du moteur thermique à transfert-détente et régénération 1 suivant l'invention, l'actionneur de soupape doseuse d'admission de compresseur 67 peut régler la quantité d'air admise par le compresseur 2 soit durant la course d'admission dudit compresseur 2 la fermeture de la soupape doseuse d'admission de compresseur 66 étant plus ou moins précoce, soit durant la course de compression dudit compresseur 2 la fermeture de ladite soupape doseuse 66 étant plus ou moins tardive.

A titre de variante représentée en figures 1 à 3, le conduit haute-pression de régénération 6 et le conduit basse-pression de régénération 7 peuvent être accolés l'un à l'autre sur toute ou partie de leur longueur, le sens de la circulation des gaz contenus dans le conduit haute-pression de régénération 6 étant inverse au sens de la circulation des gaz contenus dans le conduit basse-pression de régénération 7, les deux dits conduits 6, 7 constituant un échangeur thermique à contre-courant 41 connu en soi, lequel peut être constitué de tubes, de tôles empilées ou de tout autre agencement connu de l'homme de l'art et applicable à ce type d'échangeur.

On note aussi en figures 1 et 3 que la source de chaleur 12 peut être un brûleur 38 constitué d'un injecteur de carburant 39 et d'une chambre de combustion 40, ledit carburant pouvant être liquide ou gazeux et la chambre de combustion pouvant être de tout type connu de l'homme de l'art.

La figure 2 montre une variante selon laquelle la source de chaleur 12 peut être constituée d'un échangeur de chaleur primaire 46 qui extrait de la chaleur d'une source universelle de chaleur 47 pour transmettre ladite chaleur aux gaz circulant dans le conduit de sortie haute-pression de régénérateur 9 directement, ou via un circuit secondaire de transport de chaleur 48, la source universelle de chaleur 47 pouvant résulter - à titre d'exemple non-limitatif - de la combustion d'hydrocarbures d'origine fossile ou renouvelable, ou de la combustion d'hydrogène, ou d'une réaction nucléaire.

On remarque que le circuit secondaire de transport de chaleur 48 peut véhiculer de la chaleur via un fluide caloporteur pouvant être de toute nature y-compris des sels fondus ou des métaux liquides. On note qu'avantageusement, une partie au moins de l'échangeur de chaleur primaire 46 peut être à contre-courant.

On remarque en outre que si le moteur thermique à transfert-détente et régénération 1 comporte un échangeur de chaleur primaire 46, il peut fonctionner en circuit fermé. En ce cas, les gaz expulsés par le conduit de sortie de moteur 33 sont refroidis dans un échangeur via lequel ils cèdent une grande partie de leur chaleur à une source froide de quelque nature que ce soit, avant d'être aspirés à nouveau par le compresseur 2. Cette configuration préférentiellement destinée à des applications stationnaires évite notamment tout encrassement de l'échangeur thermique de régénération de sorte que ce dernier garde durablement une efficacité la plus élevée possible. Ladite configuration permet en outre d'opter pour des gaz neutres non-oxydants et chimiquement stables comme l'azote ou le gaz carbonique, ou pour des gaz dont les caractéristiques physiques sont potentiellement plus favorables que l'air atmosphérique au rendement du moteur thermique à transfert-détente et régénération 1 selon l'invention.

La figure 1 montre que la culasse de cylindre détendeur 14 peut comporter un clapet d'équilibrage de pression 49 qui obture ou non un conduit reliant la chambre de transvasement-détente 16 et le conduit d'admission des gaz chauds 19, ledit clapet 49 étant ouvert si la pression qui règne dans chambre de transvasement-détente 16 est supérieure à celle régnant dans le conduit d'admission des gaz chauds 19 de sorte que les gaz passent de ladite chambre 16 audit conduit 19, ledit clapet 49 étant sinon fermé de sorte que lesdits gaz ne peuvent pas passer dudit conduit 19 à ladite chambre 16 via ledit clapet 49.

On remarque en figure 3 que la chambre de transvasement-détente 16 peut comporter au moins un injecteur de carburant de maintien en température 140 qui peut injecter dans ladite chambre 16 un carburant liquide, gazeux voire solide préalablement pulvérisé et ceci, afin de hausser temporairement la température des gaz chauds admis dans ladite chambre 16 par la soupape doseuse d'admission 24 au moment de l'admission desdits gaz dans ladite chambre 16.

Il résulte de cette première stratégie une augmentation du rendement du moteur thermique à transfert-détente et régénération 1 suivant l'invention.

En alternative ou en complément de ladite première stratégie, l'injecteur de carburant de maintien en température 140 peut injecter du carburant dans la chambre de transvasement-détente 16 après que se soit fermée la doseuse d'admission 24 pour compenser en tout ou partie la baisse de température desdits gaz pendant tout ou partie de leur détente.

Il résulte de cette deuxième stratégie que lesdits gaz conservent approximativement leur température de début de détente pendant tout ou partie de leur détente, ce qui augmente le rendement du moteur thermique à transfert-détente et régénération 1.

Toujours en figure 3, on note que la chambre de transvasement-détente 16 peut comporter au moins un injecteur d'eau anti-NOx 141 qui peut injecter dans ladite chambre 16 un liquide réfrigérant - par exemple de l'eau - afin de maintenir la température maximale des gaz chauds contenus dans ladite chambre 16 en deçà d'un certain seuil notamment lors de la re-compression desdits gaz en fin de course d'échappement.

Cette brève injection de liquide réfrigérant permet de réduire la quantité de polluants et notamment d'oxydes d'azote produits par le moteur thermique à transfert-détente et régénération 1 suivant l'invention.

On voit en figures 2 à 5 que le piston détendeur 15 peut être raccordé aux moyens mécaniques de transmission 18 par une tige de piston détendeur 68 qui traverse la culasse de cylindre détendeur 14, une étanchéité étant réalisée entre ladite tige 68 et ladite culasse 14 par des moyens d'étanchéité de tige 69 qui peuvent être constitués d'au moins un joint, un segment, une bague ou de tout autre moyen d'étanchéité connu de l'homme de l'art.

La figure 22 précise que les moyens d'étanchéité de tige 69 peuvent comprendre une étanchéité supérieure de tige 70 et une étanchéité inférieure de tige 71 suffisamment éloignées l'une de l'autre pour former - entre les deux dites étanchéités 70, 71 - une chambre à circulation d'huile 72 dans laquelle débouche un conduit d'amenée d'huile de refroidissement-lubrification 73 et de laquelle repart un conduit de sortie d'huile de refroidissement-lubrification 74.

Ainsi constitués, les moyens d'étanchéité de tige 69 permettent à de l'huile circulant entre le conduit d'amenée d'huile de refroidissement-lubrification 73 et le conduit de sortie d'huile de refroidissement-lubrification 74 via la chambre à circulation d'huile 72 d'assurer d'une part, la lubrification entre la tige de piston détendeur 68 et les deux dites étanchéités 70, 71 et d'autre part, le refroidissement de la tige de piston détendeur 68.

On note que l'étanchéité supérieure de tige 70 et/ou l'étanchéité inférieure de tige 71 peut être notamment constituée d'un segment à coupe ou de deux segments à coupes superposés et dont les coupes sont angulairement décalées tandis que la surface externe de la tige de piston détendeur 68 peut être pourvue de rayures de faible profondeur en double hélice qui forment une succession de réservoirs d'huile et de surfaces de portance hydrodynamique.

En figure 22, on remarque que les segments qui constituent l'étanchéité supérieure de tige 70 peuvent être maintenus à distance de ceux constituants l'étanchéité inférieure de tige 71 par un ressort écarteur de segments 75 également conçu - notamment parce qu'il comprend des orifices ou des passages - pour laisser passer le débit d'huile de refroidissement et de lubrification établi entre le conduit d'amenée d'huile de refroidissement-lubrification 73 et le conduit de sortie d'huile de refroidissement-lubrification 74.

On remarque que - comme l'illustre la figure 21 - les moyens d'étanchéité de tige 69 peuvent également s'appliquer au tube d'amenée de pression 128 de sorte à réaliser une étanchéité entre ce dernier et la culasse de cylindre détendeur 14 ou l'alésage de chambre de pression 130 que traverse ledit tube 128, en plus d'assurer le refroidissement dudit tube 128.

La figure 21 permet de préciser que les moyens d'étanchéité de tige 69 peuvent coopérer avec une bague de guidage de tige 76 logée à l'intérieur ou en dehors de la chambre à circulation d'huile 72, ladite bague 76 étant réalisée en bronze ou en toute autre matière usuellement utilisée pour fabriquer des paliers ou bagues antifriction et/ou hydrodynamiques, et ladite bague 76 assurant le guidage radial de la tige de piston détendeur 68 dans la culasse de cylindre détendeur 14.

On remarque d'ailleurs que les moyens d'étanchéité de tige 69 sont préférentiellement munis d'une bague de guidage de tige 76 lorsqu'ils s'appliquent au tube d'amenée de pression 128 tandis que le guidage radial de la tige de piston détendeur 68 peut être indirectement assuré par la crosse 44.

En figures 2 à 5, on remarque que les moyens mécaniques de transmission 18 du moteur thermique à transfert-détente et régénération 1 selon l'invention peuvent être constitués d'une bielle 42 dont l'une des extrémités s'articule directement ou indirectement dans le piston détendeur 15 et dont l'autre extrémité s'articule autour d'une manivelle 43 solidaire de l'arbre de sortie de puissance 17.

On notera que si le cylindre détendeur 13 définit avec le piston détendeur 15 deux chambres de transvasement-détente 16, la bielle peut s'articuler dans le piston détendeur 15 par l'intermédiaire d'une crosse 44 solidaire dudit piston 15 et être guidée en translation par rapport au carter de moteur 45. La crosse 44 peut alors être un piston de guidage cylindrique coulissant dans un cylindre de guidage, ou être d'une quelconque forme qui coopère avec des rails ou des guides aménagés dans ou sur le carter de moteur 45.

La figure 6 illustre que la soupape doseuse d'admission 24 et/ou la soupape d'échappement 31 du moteur thermique à transfert-détente et régénération 1 selon l'invention peut être guidée directement ou indirectement dans une cage de soupape 50 logée dans la culasse de cylindre détendeur 14, ladite cage 50 comportant un siège sur lequel peut reposer ladite soupape 24, 31 pour constituer une étanchéité tandis que ledit siège et/ou la partie de la cage de soupape 50 qui guide ladite soupape 24, 31 est refroidi par un circuit de refroidissement de soupape 51 dans lequel circule un fluide caloporteur. On note sur la figure 6 que ladite soupape 24, 31, la cage de soupape 50 et l'actionneur de soupape doseuse 25 ou l'actionneur de soupape d'échappement 32 peuvent constituer une cartouche prêt-à-monter 52 qui s'insère dans la culasse de cylindre détendeur 14.

La figure 5 et les figures 11 à 20 montrent que de manière générale, le piston détendeur 15 du moteur thermique à transfert-détente et régénération 1 selon l'invention peut comporter des moyens d'étanchéité de piston 53 qui réalisent entre ledit piston 15 et le cylindre détendeur 13 une étanchéité la plus parfaite possible et qui peuvent être constitués d'au moins un segment à coupe et/ou d'une bague d'étanchéité, quels que soient la matière et la géométrie dudit segment et/ou de ladite bague.

De façon plus particulière, la figure 5 et les figures 11 à 20 montrent que les moyens d'étanchéité de piston 53 du moteur thermique à transfert-détente et régénération 1 selon l'invention peuvent comprendre au moins un anneau continu perforé 105 qui comporte une face cylindrique interne d'anneau 106, une face cylindrique externe d'anneau 107 et deux faces axiales d'anneau 108 ledit anneau 105 étant logé dans au moins une gorge d'anneau 109 aménagée dans le piston détendeur 15 tandis que ledit anneau 105 peut se mouvoir radialement dans la gorge d'anneau 109 sans pouvoir sortir de cette dernière. On note d'ailleurs que la gorge d'anneau 109 peut maintenir directement ou indirectement l'anneau continu perforé 105 axialement solidaire du piston détendeur 15.

En ce cas, les moyens d'étanchéité de piston 53 du moteur thermique à transfert-détente et régénération 1 selon l'invention comportent des moyens d'étanchéité d'anneau 110 qui réalisent une étanchéité entre chaque face axiale d'anneau 108 et la gorge d'anneau 109, de sorte que cette dernière définisse avec l'anneau continu perforé 105 une chambre de répartition de pression 119. On note que les moyens d'étanchéité d'anneau 110 peuvent être constitués d'un joint torique 132, d'un joint à lèvre, d'un joint composite, ou de tout joint ou segment d'étanchéité connu en soi quelle qu'en soit la matière ou la géométrie. Il est également à noter que la face cylindrique interne d'anneau 106 ou la face cylindrique externe d'anneau 107 qui fait face à la gorge d'anneau 109 peut être une forme de révolution non-cylindrique de sorte que toutes les variations d'épaisseur de l'anneau continu perforé 105 soient possible sur sa longueur axiale, ledit anneau 105 pouvant être, soit une simple tôle circulaire déformée par galetage ou estampage, soit une pièce réalisée par laminage, par tout outil de coupe ou de rectification, ou par tout autre procédé de fabrication électrochimique ou autre connu de l'homme de l'art.

Toujours dans la configuration des moyens d'étanchéité de piston 53 du moteur thermique à transfert-détente et régénération 1 selon l'invention montrés en figure 5 et en figures 11 à 20 et basés sur au moins un anneau continu perforé 105, au moins un orifice calibré 111 traverse de part en part l'anneau continu perforé 105 dans son épaisseur radiale, la première extrémité dudit orifice 111 débouchant sur la face cylindrique interne d'anneau 106 tandis que la deuxième extrémité dudit orifice 111 débouche sur la face cylindrique externe d'anneau 107.

Lesdits moyens d'étanchéité de piston 53 comportent aussi au moins une source de fluide sous pression 112 d'où sort un fluide d'anneau 113 mis sous pression, la sortie de ladite source de fluide 112 étant reliée à la chambre de répartition de pression 119 par un circuit de transfert de pression 114 de sorte que le fluide d'anneau 113 exerce une pression sur la face cylindrique interne d'anneau 106. On note que la pression à laquelle est soumis le fluide d'anneau 113 est toujours supérieure à celle régnant dans la chambre de transvasement-détente 16. En conséquence de ce qui précède, le diamètre de l'anneau continu perforé 105 augmente sous l'effet de la pression du fluide d'anneau 113 du fait de l'élasticité dudit anneau 105 de sorte que la face cylindrique externe d'anneau 107 tend à se rapprocher du cylindre détendeur 13.

On note également que le diamètre de l'orifice calibré 111 est calculé pour que, tenant compte du débit de fluide d'anneau 113 provenant de la source de fluide sous pression 112, la pression qu'exerce ledit fluide d'anneau 113 sur la face cylindrique interne d'anneau 106 reste toujours supérieure à celle régnant dans la chambre de transvasement-détente 16. On remarque que la source de fluide sous pression 112 peut être un compresseur de fluide pneumatique 120 à piston, à palettes, à vis, centrifuge ou de tout type connu de l'homme de l'art ou de tout autre type connu en soi. Le compresseur de fluide pneumatique 120 peut coopérer ou non avec un accumulateur de pression connu en soi. On note qu'un filtre à fluide d'anneau 138 à mailles fines peut être monté en amont ou en aval du compresseur de fluide pneumatique 120 de sorte à débarrasser le fluide d'anneau 113 de toute particule excédant une certaine taille avant que ledit fluide 113 ne soit introduit dans la chambre de répartition de pression 119.

Les moyens d'étanchéité de piston 53 du moteur thermique à transfert-détente et régénération 1 selon l'invention montrés en figure 5 et en figures 11 à 20 étant basés sur au moins un anneau continu perforé 105, lesdits moyens 53 comportent au moins un évidement de contrepression 115 axialement non-débouchant et aménagé en creux sur la face cylindrique externe d'anneau 107, l'orifice calibré 111 débouchant dans ledit évidement de contrepression 115 tandis que la surface de la face cylindrique externe d'anneau 107 non-occupée par ledit évidemment 115 constitue une surface de portance sur coussin d'air 116.

On note que l'étendue de l'évidement de contrepression 115 peut être de toute dimension depuis la plus petite, c'est à dire équivalente au rayon non-nul du débouché de l'orifice calibré 111, à la plus grande c'est à dire juste sensiblement inférieure à celle de la face cylindrique externe d'anneau 107 qui reçoit ledit évidement 115. Il est précisé que le piston détendeur 15 peut comporter au voisinage de la gorge d'anneau 109 une gorge de décompression ou des rainures ou tout autre canal interne ou de surface de quelque type que ce soit qui relie ledit voisinage avec la chambre de transvasement-détente 16.

Les figures 11 à 20 montrent que les moyens d'étanchéité de piston 53 du moteur thermique à transfert-détente et régénération 1 selon l'invention peuvent être prévus avec l'évidement de contrepression 115 qui est constitué d'une gorge de contrepression 117 de faible profondeur plus ou moins centrée sur la longueur axiale de la face cylindrique externe d'anneau 107, ladite gorge de contrepression 117 étant réalisée sur toute la circonférence de ladite face cylindrique externe d'anneau 107, les surfaces annulaires qui bordent ladite gorge de contrepression 117 constituant chacune une surface de portance sur coussin d'air 116.

En figures 13 à 20, on voit que l'orifice calibré 111 peut déboucher dans l'évidement de contrepression 115 par l'intermédiaire d'un évidement de distribution de pression 125 aménagé en creux au fond dudit évidement de contrepression 115.

Sur les mêmes figures 13 à 20, on constate que l'évidement de distribution de pression 125 peut être constitué d'une gorge de distribution de pression 126 plus ou moins centrée sur la longueur axiale de la face cylindrique externe d'anneau 107, ladite gorge de distribution de pression 126 étant réalisée sur toute la circonférence de ladite face cylindrique externe d'anneau 107.

Les figures 15 et 16 montrent qu'au moins l'un des deux bords axiaux de la face cylindrique externe d'anneau 107 ou de la face cylindrique interne d'anneau 106 qui reçoit l'évidement de contrepression 115 peut se terminer par une dépouille de placage de bord 118 qui permet à la pression du fluide d'anneau 113 que contient la chambre de répartition de pression 119 d'exercer un effort localement plus élevé sur la surface de portance sur coussin d'air 116 qui jouxte ladite dépouille de placage de bord 118.

En figures 15 et 16, on voit aussi que les moyens d'étanchéité d'anneau 110 peuvent être constitués d'une lèvre d'étanchéité d'anneau 121 qui est solidaire de l'anneau continu perforé 105 d'une part, et qui établit un contact étanche avec l'intérieur ou le rebord de la gorge d'anneau 109 d'autre part, ladite lèvre d'étanchéité 121 pouvant être montée rapportée sur l'anneau continu perforé 105 ou pouvant être réalisée dans la même pièce de matière que ledit anneau 105. On note qu'en alternative, la lèvre d'étanchéité d'anneau 121 peut être solidaire de la gorge d'anneau 109 d'une part, et établir un contact étanche avec l'anneau continu perforé 105 d'autre part. En ce cas, ladite lèvre 121 peut être soit montée rapportée dans la gorge d'anneau 109 ou sur le rebord de cette dernière, soit être réalisée dans la même pièce de matière que ladite gorge 109.

A titre de variante des moyens d'étanchéité de piston 53 du moteur thermique à transfert-détente et régénération 1 selon l'invention montrée en figures 17 et 18, les moyens d'étanchéité d'anneau 110 peuvent être constitués d'une portion axiale désépaissie 139 aménagée au voisinage de l'une au moins des extrémités axiales de l'anneau continu perforé 105, ladite portion 139 étant solidaire de la gorge d'anneau 109 de façon étanche, et étant suffisamment souple pour permettre au diamètre de l'anneau continu perforé 105 d'augmenter ou de diminuer par rapport à celui de ladite gorge 109. On note que la portion axiale désépaissie 139 est conçue de telle sorte que le matériau qui la constitue ne risque en aucun cas de céder que ce soit sous l'effet de la pression du fluide d'anneau 113, ou que ce soit à cause d'une contrainte répétée incompatible avec les limites de résistance à la fatigue dudit matériau.

La figure 12 quant à elle montre que l'anneau continu perforé 105 peut être constitué d'un matériau souple et comprendre au moins un ressort circonférentiel d'anneau 123 qui tend à réduire le diamètre dudit anneau 105. On note que ledit matériau souple peut être un élastomère ou un polymère chargé ou non de particules anti abrasives ou antifriction cependant que le ressort circonférentiel d'anneau 123 peut être inclus dans ledit matériau ou maintenu en surface de ce dernier au moyen d'une gorge, d'un logement ou de butées. Le ressort circonférentiel d'anneau 123 peut être hélicoïdal à l'instar des ressorts de joint de queue de soupape, être une bague fendue ou être de tout autre type lui permettant de remplir la fonction recherchée.

Les variantes illustrées en figures 13 à 18 des moyens d'étanchéité de piston 53 du moteur thermique à transfert-détente et régénération 1 selon l'invention montrent que la chambre de répartition de pression 119 peut héberger des moyens de diffusion de fluide d'anneau 124 qui forcent le fluide d'anneau 113 en provenance du circuit de transfert de pression 114 à lécher la plus grande surface possible de la face cylindrique interne d'anneau 106 avant de s'échapper via l'orifice calibré 111. Cette disposition permet au fluide d'anneau 113 de refroidir l'anneau continu perforé 105 ce dernier cédant audit fluide 113 une partie de sa chaleur.

Comme le montrent les figures 15 et 16, les moyens de diffusion de fluide d'anneau 124 peuvent être constitués d'une plaque de diffusion 136 logée au fond de la gorge d'anneau 106, l'une au moins des extrémités axiales de ladite plaque 136 étant munie d'au moins un orifice ou gorge latérale de plaque de diffusion 137 qui force le fluide d'anneau 113 provenant du circuit de transfert de pression 114 à déboucher dans la chambre de répartition de pression 119 par l'une au moins de ses extrémités axiales.

La figure 12 montre que la gorge d'anneau 109 peut présenter une butée radiale d'anneau 127 qui limite la pénétration de l'anneau continu perforé 105 dans ladite gorge 109 ladite butée 127 pouvant être - à titre non-limitatif - une surface cylindrique constituant le fond de la gorge d'anneau 109, ou au moins une arête circulaire ou des plots aménagés au fond de ladite gorge 109, ou au moins un chanfrein ou rebord aménagé sur au moins l'un des deux bords de ladite gorge 109.

On voit en figures 4 et 5 que le circuit de transfert de pression 114 peut être constitué d'un tube d'arrivée de pression 128 parallèle au cylindre détendeur 13 et solidaire du piston détendeur 15, une première extrémité dudit tube 128 débouchant à l'intérieur dudit piston 15 tandis que la deuxième extrémité dudit tube 128 débouche, via un alésage de chambre de pression 130 dans lequel il peut translater longitudinalement et de façon étanche, dans une chambre de pression 129 reliée à la source de fluide sous pression 112.

On note que la deuxième extrémité du tube d'arrivée de pression 128 qui translate dans l'alésage de chambre de pression 130 peut comporter un joint d'étanchéité qui glisse dans ledit alésage 130 pour réaliser une étanchéité. En alternative, l'alésage de chambre de pression 130 peut comporter un joint d'étanchéité qui glisse autour de ladite deuxième extrémité du tube d'arrivée de pression 128 pour réaliser une étanchéité.

On note toutefois qu'à l'instar de la tige de piston détendeur 68 qui traverse la culasse de cylindre détendeur 14, une étanchéité de tube peut - comme le montre la figure 21 - être réalisée entre le tube d'arrivée de pression 128 et l'alésage de chambre de pression 130 qui comprend une étanchéité supérieure de tige 70 et une étanchéité inférieure de tige 71 suffisamment éloignées l'une de l'autre pour former - entre les deux dites étanchéités 70, 71 - une chambre à circulation d'huile 72 dans laquelle débouche un conduit d'amenée d'huile de refroidissement-lubrification 73 et de laquelle repart un conduit de sortie d'huile de refroidissement-lubrification 74.

L'étanchéité de tube ainsi constituée permet à de l'huile circulant entre le conduit d'amenée d'huile de refroidissement-lubrification 73 et le conduit de sortie d'huile de refroidissement-lubrification 74 via la chambre à circulation d'huile 72 d'assurer d'une part, la lubrification entre le tube d'arrivée de pression 128 et les deux dites étanchéités 70, 71 et d'autre part, le refroidissement du tube d'arrivée de pression 128.

En figure 4, on constate que le tube d'arrivée de pression 128 peut être relié à la chambre de répartition de pression 119 par au moins un conduit radial d'arrivée de pression 131 qui peut être réalisé dans la masse du piston détendeur 15 ou qui peut être rapporté dans ce dernier par exemple par assemblage de tubes comportant ou non des joints d'étanchéité et/ou de dilatation.

On notera que la chambre de pression 129 peut être reliée à la source de fluide sous pression 112 via un clapet anti-retour de pression proportionnelle qui permet au fluide d'anneau 113 d'aller de ladite source 112 à ladite chambre 129, mais non d'aller de ladite chambre 129 à ladite source 112. Cette disposition particulière permet d'utiliser la variation du volume de la chambre de pression 129 que produisent les mouvements de va-et-vient de la deuxième extrémité du tube d'arrivée de pression 128 pour augmenter la pression qui règne dans la chambre de répartition de pression 119 lorsque le piston détendeur 151 est au voisinage de son point mort haut.

Les figures 13, 14, 17 et 18 montrent que la gorge d'anneau 109 peut héberger un ressort d'expansion 133 qui prend appui sur ladite gorge 109 pour exercer un effort radial sur la face cylindrique interne d'anneau 106, ledit ressort 133 pouvant être hélicoïdal, à lame, ondulé ou de type connu de l'homme de l'art.

Sur les figures 13 et 14, on voit que le ressort d'expansion 133 peut réaliser par contact une étanchéité entre la gorge d'anneau 109 et l'anneau continu perforé 105.

Les figures 13, 14, 17 et 18 montrent en outre que le ressort d'expansion 133 peut être muni d'au moins un orifice de diffusion de fluide 134 et/ou d'au moins une gorge de diffusion de fluide 135 de sorte à constituer avec ledit orifice 134 et/ou ladite gorge 135 les moyens de diffusion de fluide d'anneau 124.

### FONCTIONNEMENT DE L'INVENTION :

Le fonctionnement du moteur thermique à transfert-détente et régénération 1 selon l'invention se comprend aisément à la vue des figures 1 à 22. Pour détailler ledit fonctionnement, nous retiendrons ici l'exemple de réalisation du moteur thermique à transfert-détente et régénération selon l'invention tel qu'illustré de façon schématique en figures 1 et 2. Ledit exemple de réalisation prévoit un compresseur à pistons à deux étages constitué d'un compresseur basse-pression 35 et d'un compresseur haute-pression 36, la sortie du compresseur basse-pression étant reliée à l'entrée du compresseur haute-pression via un refroidisseur intermédiaire de compresseur 37. Les figures 1 et 2 se distinguant principalement l'une de l'autre par la source de chaleur 12, pour expliquer le fonctionnement de la présente invention nous retiendrons la source de chaleur 12 montrée en figure 1 laquelle prévoit un brûleur 38 dont l'injecteur de carburant 39 alimente une chambre de combustion 40.

Selon l'exemple de réalisation du moteur thermique à transfert-détente et régénération 1 selon l'invention montré en figures 1 et 2, le compresseur basse-pression 35 et le compresseur haute-pression 36 sont entraînés par un même arbre de sortie de puissance 17 lequel prend la forme d'un arbre à manivelles, tandis que les moyens mécaniques de transmission 18 entre le piston détendeur 15 et ledit arbre 17 sont constitués d'une bielle 42 dont l'une des extrémités s'articule dans le piston détendeur 15 par l'intermédiaire d'une crosse 44 solidaire dudit piston 15 et dont l'autre extrémité s'articule autour d'une manivelle 43 solidaire de l'arbre de sortie de puissance 17.

On remarque que le compresseur basse-pression 35 et le compresseur haute-pression 36 sont reliés à l'arbre de sortie de puissance 17 par des moyens similaires.

On remarque également en figure 2 que la soupape doseuse d'admission 24 ouvre la bouche de conduit d'admission des gaz chauds 23 qu'elle obture en s'éloignant du cylindre détendeur 13 tandis que la soupape d'échappement 31 ouvre la bouche de conduit d'échappement des gaz détendus 28 qu'elle obture en se rapprochant dudit cylindre 13, les sièges desdites soupapes 24, 31 étant respectivement orientés vers l'extérieur et vers l'intérieur dudit cylindre 13.

L'explication du fonctionnement du moteur thermique à transfert-détente et régénération 1 selon l'invention fera également référence aux figures 4 et 5 qui montrent en trois dimensions le cylindre détendeur 13 et les différents organes avec lesquels il coopère, le même dit cylindre 13 étant montré schématiquement en figures 1 et 2.

Ceci exposé, le moteur thermique à transfert-détente et régénération 1 selon l'invention fonctionne - selon un exemple non-limitatif de réalisation - de la façon suivante une fois démarré et une fois son fonctionnement stabilisé : le compresseur basse-pression 35 aspire de l'air atmosphérique via le conduit d'entrée de compresseur 3. La température et la pression dudit air étant respectivement de vingt degrés Celsius et de un bar absolu. Le compresseur basse-pression 35 refoule ensuite ledit air à une pression de dix bars et à une température de l'ordre de deux cent quatre vingt quinze degrés Celsius. Avant d'atteindre l'entrée du compresseur haute-pression 36, ledit air est refroidi dans le refroidisseur intermédiaire de compresseur 37 de sorte que la température dudit air retombe à nouveau au voisinage des vingt degrés Celsius, sa pression restant inchangée à dix bars. Ce refroidissement intermédiaire améliore le rendement volumétrique du compresseur haute-pression 36 et diminue la ponction de travail que ledit compresseur 36 opère sur l'arbre de sortie de puissance 17.

Le compresseur haute-pression 36 qui reçoit ledit air aspire ce dernier et le surcomprime pour le refouler dans le conduit de sortie de compresseur 4 à une pression de vingt bars et à une température de l'ordre de quatre vingt cinq degrés Celsius.

L'air est ensuite acheminé par le conduit de sortie de compresseur 4 dans le conduit haute-pression de régénération 6 où il reçoit de la chaleur du conduit basse-pression de régénération 7. La cession de chaleur entre le conduit basse-pression de régénération 7 et le conduit haute-pression de régénération 6 s'opère dans l'échangeur thermique de régénération 5 qui dans ce cas est un échangeur thermique à contre-courant 41 dont le rendement est particulièrement élevé.

Les gaz ressortent du conduit haute-pression de régénération 6 toujours à vingt bars mais à une température voisine de trois cent degrés Celsius tandis que ceux qui ressortent du conduit basse-pression de régénération 7 ont été portés à une pression de un bar et à une température de l'ordre de quatre vingt dix degrés Celsius.

Une fois sortis du conduit haute-pression de régénération 6, les gaz à trois cent degrés Celsius pénètrent dans le conduit de sortie haute-pression de régénérateur 9 et passent ensuite dans la chambre de combustion 40 du brûleur 38 où leur température s'élève à onze cent degrés Celsius consécutivement à la combustion du carburant injecté dans ladite chambre 40 par l'injecteur de carburant 39. La pression desdits gaz est toujours de vingt bars.

Les gaz sortent ensuite du conduit de sortie haute-pression de régénérateur 9 pour pénétrer dans le conduit d'admission des gaz chauds 19 qui va les acheminer jusqu'au cylindre détendeur 13 pour y être admis désormais à une température de onze cent degrés Celsius et toujours à une pression de vingt bars.

A ce stade de l'explication du fonctionnement du moteur thermique à transfert-détente et régénération 1 selon l'invention, nous ne décrirons que ce qui se passe dans la chambre de transvasement-détente 16 située au dessus du piston détendeur 15 tel que représenté en figure 2 et en figures 4 et 5, sachant que la chambre de transvasement-détente 16 située au dessous dudit piston 15 fonctionne de façon strictement identique.

Le piston détendeur 15 étant au point mort bas, il remonte vers son point mort haut tout en expulsant dans le conduit d'échappement des gaz détendus 26 les gaz chauds qu'il a préalablement détendus depuis vingt bars et onze cent degrés Celsius jusqu'à un bar et trois cent dix degrés Celsius.

Lorsque le piston détendeur 15 arrive au voisinage de son point mort haut, la soupape d'échappement 31 se referme et emprisonne une certaine quantité de gaz d'échappement résiduels dans la chambre de transvasement-détente 16. Le moment de la fermeture de ladite soupape 31 est calculé pour que la pression et la température desdits gaz remonte respectivement à vingt bars et onze cent degrés Celsius lorsque le piston détendeur 15 atteint son point mort haut. Ledit moment dépend donc principalement du volume mort restant au dessus du piston détendeur 15 lorsque ce dernier atteint ledit point mort haut.

Ainsi, lorsque le piston détendeur 15 atteint son point mort haut, la pression et la température des gaz emprisonnés dans la chambre de transvasement-détente 16 sont identiques à celles des gaz contenus dans le conduit d'admission des gaz chauds 19. C'est à ce moment précis que la soupape doseuse d'admission 24 s'ouvre et met en relation ledit conduit 19 avec ladite chambre 16. Pour éviter toute surpression dans la chambre de transvasement-détente 16 consécutive à une synchronisation imparfaite de la soupape doseuse d'admission 24 on note que la culasse de cylindre détendeur 14 du moteur thermique à transfert-détente et régénération 1 selon l'invention peut, au titre de la variante montrée en figure 1, comporter un clapet d'équilibrage de pression 49 qui s'ouvre dès que la pression qui règne dans chambre de transvasement-détente 16 est supérieure à celle régnant dans le conduit d'admission des gaz chauds 19.

Le piston détendeur 15 étant au point mort haut, la soupape doseuse d'admission 24 étant ouverte et la pression et la température des gaz étant identique de part et d'autre de la bouche de conduit d'admission des gaz chauds 23, le piston détendeur 15 amorce sa descente vers son point mort bas.

Ce faisant, les gaz à onze cent degrés Celsius et vingt bars contenus dans le conduit d'admission des gaz chauds 19 pénètrent dans la chambre de transvasement-détente 16 tandis que le piston détendeur 15 produit un premier travail sur l'arbre de sortie de puissance 17. Lorsqu'une certaine quantité desdits gaz a été transvasée dans la chambre de transvasement-détente 16, la soupape doseuse d'admission 24 se ferme et la détente desdits gaz débute de sorte que le piston détendeur 15 produit un deuxième travail sur l'arbre de sortie de puissance 17. Ladite certaine quantité est prévue pour que lorsque le piston détendeur 15 arrive en son point mort bas, la pression desdits gaz soit sensiblement équivalente à la pression atmosphérique de un bar absolu tandis que la température desdits gaz est de l'ordre de trois cent dix degrés Celsius.

Une fois le piston détendeur 15 arrivé au point mort bas, il remonte à nouveau vers son point mort haut tout en expulsant les gaz chauds par la bouche de conduit d'échappement des gaz détendus 28, lesdits gaz ayant été préalablement détendus par ledit piston 15 depuis vingt bars et onze cent degrés Celsius jusqu'à un bar et trois cent dix degrés Celsius. Ceci marque le commencement d'un nouveau cycle.

Le diagramme pression-volume de la figure 7 illustre le déroulement du cycle opéré dans la chambre de transvasement-détente 16. On remarque sur ladite figure 7 que - comme c'est le cas s'agissant des figures 8, 9 et 10 - le point mort bas du piston détendeur 15 est noté « **PMB** » tandis que le point mort haut dudit piston 15 est noté « **PMH** ».

Selon l'exemple pris en figure 7 pour expliquer le fonctionnement du moteur thermique à transfert-détente et régénération 1 selon l'invention, la course **AB** opérée par le piston détendeur 15 s'effectue alors que la pression des gaz contenus dans la chambre de transvasement-détente 16 est de un bar et que la température desdits gaz est de trois cent dix degrés Celsius.

Durant la course **BC,** le piston détendeur 15 comprime les gaz d'échappement résiduels emprisonnés dans la chambre de transvasement-détente 16 par la soupape d'échappement 31 de sorte que la pression et la température desdits gaz passe respectivement à vingt bars et onze cent degrés Celsius.

La course **CD** correspond au transvasement dans la chambre de transvasement-détente 16 des gaz à onze cent degrés Celsius et vingt bars contenus dans le conduit d'admission des gaz chauds 19 tandis que le piston détendeur 15 produit un premier travail sur l'arbre de sortie de puissance 17.

La course **DA** correspond quant à elle à la détente des gaz préalablement transvasés dans la chambre de transvasement-détente 16 et dont la quantité est réglée par la soupape doseuse d'admission 24 de telle sorte que lorsque le piston détendeur 15 arrive en son point mort bas, la pression desdits gaz est sensiblement équivalente à la pression atmosphérique de un bar absolu. La détente desdits gaz permet au piston détendeur 15 de produire un deuxième travail sur l'arbre de sortie de puissance 17.

Le diagramme pression-volume de la figure 8 illustre quant à lui une stratégie de contrôle différente de la soupape doseuse d'admission 24, ladite stratégie étant prévue pour maximiser le couple spécifique du moteur thermique à transfert-détente et régénération 1 selon l'invention et donc, pour maximiser la puissance spécifique dudit moteur 1 à iso régime.

Sur le diagramme que montre la figure 8, on remarque que par rapport au diagramme de la figure 7, le moment de la fermeture « **D** » de la soupape doseuse d'admission 24 a été retardé au point marqué « **D'** ». Ainsi, plus de gaz à onze cent degrés Celsius et vingt bars sont transvasés depuis le conduit d'admission des gaz chauds 19 vers la chambre de transvasement-détente 16.

Ce surplus de gaz étant admis, la course **D'A** du piston détendeur 15 devient insuffisante pour détendre lesdits gaz jusqu'à un bar absolu. En conséquence, lorsque la soupape d'échappement 31 s'ouvre, la pression des gaz est encore par exemple de trois bars tandis que leur température est encore de cinq cent vingt degrés Celsius. En revanche, l'aire de travail des gaz est significativement augmentée bien qu'au prix d'une baisse sensible de rendement du moteur thermique à transfert-détente et régénération 1 selon l'invention.

On remarque en figure 8 que les courses **AB** et **BC** demeurent inchangées par rapport à celles correspondantes montrées en figure 7.

On note également qu'à l'ouverture de la soupape d'échappement 31, le surcroît de température des gaz qui résulte de la troncature de la détente telle que prévue en figure 8 est principalement recyclé par l'échangeur thermique de régénération 5 pour préchauffer les gaz reçus du compresseur haute-pression 36. En conséquence, ledit surcroît minore d'autant la chaleur que le brûleur 38 doit produire pour hausser la température des gaz qui interviendront dans les cycles suivants à onze cent degrés Celsius.

L'énergie motrice non-récupérée consécutivement à ladite troncature est quant à elle perdue.

Le diagramme pression-volume de la figure 9 illustre une autre variante de contrôle de la soupape doseuse d'admission 24 et de la soupape d'échappement 31. Ladite variante est cette fois-ci prévue pour réduire le couple spécifique du moteur thermique à transfert-détente et régénération 1 selon l'invention et donc, pour réduire la puissance spécifique dudit moteur 1 à même régime. Moduler à la baisse la puissance dudit moteur 1 peut s'avérer utile dans de nombreux contextes d'usage.

Sur ledit diagramme de la figure 9, on remarque que par rapport au diagramme de la figure 7, le moment de la fermeture « **D** » de la soupape doseuse d'admission 24 a été avancé au point marqué « **D'** ». Ainsi, moins de gaz à onze cent degrés Celsius et vingt bars sont transvasés depuis le conduit d'admission des gaz chauds 19 vers la chambre de transvasement-détente 16.

Il résulte de ce déficit en gaz admis que le piston détendeur 15 détend les gaz jusqu'à son point mort bas noté « **PMB** » jusqu'à une pression inférieure à un bar absolu. Aussi, la stratégie exposée en figure 9 prévoit-elle que le piston détendeur 15 re-comprime lesdits gaz jusqu'à ce que la pression de ces derniers soit de un bar absolu et de l'ordre de trois cent dix degrés Celsius. Cette détente suivie d'une re-compression est notée « **DC** » en figure 9. La re-compression des gaz s'achève lorsque la soupape d'échappement 31 s'ouvre au point marqué « **A'** » lequel est fortement retardé par rapport au point « **A »** noté sur la même figure 9 en rappel du moment d'ouverture de ladite soupape 31 que montre la figure 7.

Comme on le remarque en figure 9, l'aire de travail des gaz a été significativement réduite par rapport à celle montrée en figure 7 sans pénalité pour le rendement indiqué du moteur thermique à transfert-détente et régénération 1 selon l'invention.

On notera que pour servir efficacement la stratégie illustrée en figure 9, le compresseur 2 doit aspirer moins d'air atmosphérique via le conduit d'entrée de compresseur 3. Pour cela, comme illustré en figure 3, ledit compresseur 2 peut comporter une soupape doseuse d'admission de compresseur 66 dont l'ouverture et la fermeture sont pilotées par un actionneur de soupape doseuse d'admission de compresseur 67 de sorte à admettre plus ou moins d'air atmosphérique.

A titre d'alternative illustrée en figure 1, un papillon de vannage de l'air admis 142 peut être prévu sur le conduit d'entrée de compresseur 3 pour régler la pression d'admission du compresseur 2.

Une autre stratégie illustrée en figure 10 consiste à limiter voire à annuler la baisse de la température des gaz pendant leur détente de sorte à maximiser le rendement du moteur thermique à transfert-détente et régénération 1. Ladite stratégie nécessite le recours à un injecteur de carburant de maintien en température 140 dont le nez débouche dans la chambre de transvasement-détente 16.

Comme on le remarque, l'aire de travail des gaz de ladite figure 10 est comparable en surface avec celle de la figure 7. Pour autant, on remarque aussi que par rapport au diagramme de la figure 7, le moment de la fermeture « **D** » de la soupape doseuse d'admission 24 a été avancé au point marqué « **D'** ». Ceci implique que moins de travail est consommé par le compresseur 2 pour aboutir à une aire de travail comparable produite par le piston détendeur 15.

On constate que cette stratégie peut s'appliquer sans avoir à augmenter la température maximale des gaz qui reste de onze cent degrés Celsius. Pour atteindre ce résultat, une fois la soupape doseuse d'admission 24 fermée au point marqué « **D'** », l'injecteur de carburant de maintien en température 140 injecte du carburant dans les gaz chauds pendant leur détente, ledit carburant s'enflammant instantanément au contact desdits gaz chauds, ces derniers étant par ailleurs encore riches en oxygène.

Le débit en dit carburant est par exemple calculé pour que la température desdits gaz reste au voisinage de onze cent degrés Celsius malgré la détente desdits gaz durant toute la durée de l'injection notée « **DI** » en figure 10.

La fin d'injection notée « **FI** » en figure 10 est calculée pour que la température des gaz en fin de détente reste acceptable - par exemple six cent degrés Celsius - tenant compte de la résistance thermomécanique de l'échangeur thermique de régénération destiné à recevoir lesdits gaz.

On note que la stratégie illustrée en figure 10 porte nécessairement la température des gaz en fin de course **BC** à plus de onze cent degrés Celsius. Tenant compte de cela et pour prévenir la formation excessive d'oxydes d'azote, la chambre de transvasement-détente 16 peut comporter - en plus de l'injecteur de carburant de maintien en température 140 - un injecteur d'eau anti-NOx 141 qui peut injecter de l'eau dans ladite chambre 16 afin de maintenir la température des gaz chauds contenus dans ladite chambre 16 en deçà du seuil de formation massive d'oxydes d'azote.

On remarque que vu que la température supérieure à onze cent degrés Celsius n'est trouvée en fin de course **BC** que sur une durée très brève, ladite température n'a pas d'impact significatif sur la tenue thermomécanique du cylindre détendeur 13, des culasses de cylindre détendeur 14 ou du piston détendeur 15.

Comme on peut aisément le concevoir, un autre mode d'utilisation de l'injecteur de carburant de maintien en température 140 consiste à hausser temporairement la température des gaz chauds admis dans la chambre de transvasement-détente 16 par la soupape doseuse d'admission 24 au moment de l'admission desdits gaz dans ladite chambre 16. Sur la figure 7, ceci se traduirait par une injection de carburant s'opérant pendant la course **CD.** Il résulte de cette stratégie une augmentation du rendement du moteur thermique à transfert-détente et régénération 1 suivant l'invention sans mettre en péril la tenue thermomécanique de ses principaux composants, avec toutefois la contrepartie d'une production de gaz d'échappement dont la teneur en oxydes d'azote est potentiellement élevée.

En ce cas, le conduit d'échappement des gaz détendus 26 peut par exemple comporter un catalyseur de post-traitement des oxydes d'azote à l'urée non-représenté, ce dernier disposant avantageusement d'une température élevée des gaz pour réduire lesdits oxydes.

On note que pour que l'efficacité du moteur thermique à transfert-détente et régénération 1 soit optimale, la température des parois internes du conduit de sortie haute-pression de régénérateur 9, du conduit d'admission des gaz chauds 19, du cylindre détendeur 13 et de la culasse de cylindre détendeur 14 est similaire à celle des gaz chauds que contiennent ces divers organes 9, 19, 13 et 14. Ceci permet d'opérer le cycle illustré en figure 7 de façon quasiment adiabatique. Pour cela, lesdits organes sont par exemple réalisés en céramique à base d'alumine, de zircone ou de carbure de silicium. En outre, comme l'illustre la figure 6, la soupape doseuse d'admission 24 et la soupape d'échappement 31 ainsi que leurs sièges et guides respectifs sont localement refroidis par un circuit de refroidissement de soupape 51 dans lequel circule un fluide caloporteur.

Une fois exécuté le cycle permettant au piston détendeur 15 de fournir le travail recherché sur l'arbre de sortie de puissance 17, les gaz expulsés par ledit piston 15 dans le conduit d'échappement des gaz détendus 26 atteignent le conduit basse-pression de régénération 7 que comporte l'échangeur thermique de régénération 5. Dans ledit conduit 7, lesdits gaz cèdent une partie de leur chaleur à l'air qui circule dans le conduit haute-pression de régénération 6. En conséquence, la température desdits gaz chute aux environs de quatre vingt dix degrés Celsius tandis que leur pression reste inchangée à environ un bar absolu. Lesdits gaz sont ensuite relâchés dans l'atmosphère.

On observera que pour conférer au moteur thermique à transfert-détente et régénération 1 selon l'invention le meilleur rendement possible, depuis la sortie du compresseur haute-pression et jusqu'au conduit de sortie de moteur 33, les divers conduits et organes chauds qui constituent ledit moteur 1 peuvent être recouverts d'un matériau et/ou d'une structure calorifuge qui limite les déperditions de chaleur. A titre d'exemple non-limitatif, ledit matériau peut être de tout type réfractaire et isotherme connu de l'homme de l'art tandis que ladite structure peut prendre la forme d'au moins un écran thermique.

En outre, on remarque le rôle déterminant des moyens d'étanchéité de piston 53 qui - lorsqu'ils sont notamment constitués d'un anneau continu perforé 105 - confèrent au moteur thermique à transfert-détente et régénération 1 selon l'invention un fonctionnement efficace et durable car en effet, il est indispensable de garantir la meilleure étanchéité possible entre le piston détendeur 15 et le cylindre détendeur 13, dans les meilleures conditions opérationnelles possibles.

Le fonctionnement desdits moyens d'étanchéité de piston 53 du moteur thermique à transfert-détente et régénération 1 selon l'invention est particulièrement compréhensible à la vue des figures 19 et 20 qui montrent à titre purement illustratif et didactique des moyens d'étanchéité d'anneau 110 constitués d'un joint torique 132.

On note que sur lesdites figures 19 et 20 des symboles « **+** » et « - » entourés d'un cercle ont été ajoutés qui illustrent l'écart entre la pression régnant dans la chambre de répartition de pression 119 d'une part, et celle régnant dans la gorge de distribution de pression 126, la gorge de contrepression 117 et la chambre de transvasement-détente 16 d'autre part.

Nous supposerons que la pression maximale régnant dans la chambre de transvasement-détente 16 est de vingt bars tandis que la source de fluide sous pression 112 produit un débit de fluide d'anneau 113 dont la pression maximale est de quarante bars. Ces valeurs de pression sont données à titre illustratif et ne limitent en rien les variantes de pression pouvant être retenues par l'homme de l'art en charge de la réalisation du moteur thermique à transfert-détente et régénération 1 selon l'invention.

On remarque sur les figures 1 et 2 que selon l'exemple particulier de réalisation du moteur thermique à transfert-détente et régénération 1 selon l'invention qui y est représenté, la source de fluide sous pression 112 est un compresseur de fluide pneumatique 120 à piston entraîné par l'arbre de sortie de puissance 17. Avantageusement, le piston du compresseur basse-pression 35 et celui du compresseur haute-pression 36 sont également équipés de moyens d'étanchéité analogues à ceux du piston détendeur 15 lesdits moyens recourant donc eux aussi à une source de fluide sous pression 112. On remarque sur lesdites figures 1 et 2 que la source de fluide sous pression 112 qui alimente la chambre de pression 129 qui coopère à l'étanchéité du piston du compresseur basse-pression 35 n'est autre que le compresseur haute-pression 36 tandis que le compresseur de fluide pneumatique 120 à piston alimente les chambres de pression 129 qui coopèrent à l'étanchéité du piston du compresseur haute-pression 36 et du piston détendeur 15.

On remarque également en figures 1 et 2 que l'entrée du compresseur de fluide pneumatique 120 est reliée la sortie du compresseur haute-pression 36 via un refroidisseur de fluide d'anneau 54 puis un filtre à fluide d'anneau 138. Sur ces mêmes figures 1 et 2, on constate que la sortie du compresseur de fluide pneumatique 120 est directement reliée à la chambre de pression 129 qui coopère à l'étanchéité du piston du compresseur haute-pression 36 tandis que ladite sortie peut être reliée à la chambre de pression 129 qui coopère à l'étanchéité du piston du piston détendeur 15 soit directement, soit via un refroidisseur de fluide d'anneau 54 selon la position d'un régulateur de température de fluide d'anneau 55. Ainsi, le régulateur de température de fluide d'anneau 55 permet de régler la température de fluide d'anneau 113 qui est introduit dans la chambre de pression 129 qui coopère à l'étanchéité du piston du piston détendeur 15.

La figure 19 montre lesdits moyens d'étanchéité de piston 53 du moteur thermique à transfert-détente et régénération 1 selon l'invention lorsque la source de fluide sous pression 112 commence à peine à débiter du fluide d'anneau 113 et que la chambre de répartition de pression 119 commence tout juste à monter en pression. Nous supposerons qu'à ce stade, la pression régnant dans la chambre de transvasement-détente 16 n'est encore que de un bar absolu.

On remarque que la chambre de répartition de pression 119 étant rendue étanche notamment grâce au joint torique 132, le fluide d'anneau 113 n'a d'autre issue que l'orifice calibré 111 pour s'échapper de ladite chambre 119. Au stade de fonctionnement desdits moyens d'étanchéité de piston 53 du moteur thermique à transfert-détente et régénération 1 selon l'invention illustrés en figure 19, le plein débit de fluide d'anneau 113 en provenance de la source de fluide sous pression 112 n'est pas encore établi de sorte que la pression régnant dans la chambre de répartition de pression 119 n'est que de dix bars. Malgré que la pression de quarante bars ne soit pas encore produite par la source de fluide sous pression 112, on remarque que l'anneau continu perforé 105 commence à gonfler malgré la fuite de fluide d'anneau 113 via l'orifice calibré 111 car la pression régnant dans la chambre de répartition de pression 119 est supérieure à celle régnant dans la gorge de distribution de pression 126, la gorge de contrepression 117 et la chambre de transvasement-détente 16. Le gonflement de l'anneau continu perforé 105 est symbolisé par la flèche en trait en pointillés. Le débit de fluide d'anneau 113 qui s'échappe par l'orifice calibré 111 rejoint la chambre de transvasement-détente 16 respectivement via la gorge de distribution de pression 126, la gorge de contrepression 117 et l'interstice que constitue le jeu laissé entre le piston détendeur 15 et le cylindre détendeur 13.

On notera que la section de l'orifice calibré 111 et le débit de fluide d'anneau 113 généré par la source de fluide sous pression 112 sont calculés pour que la pression de quarante bars - lorsqu'elle est effectivement produite par ladite source 112 - puisse être maintenue dans la chambre de répartition de pression 119 malgré que le fluide d'anneau 113 s'échappe par l'orifice calibré 111. Ceci revient à dire que si aucun obstacle ne limite le gonflement de l'anneau continu perforé 105, ce dernier reçoit suffisamment de débit de fluide d'anneau 113 de la part de la source de fluide sous pression 112 pour gonfler autant que s'il était parfaitement étanche, c'est à dire autant que s'il ne comportait pas d'orifice calibré 111.

L'épaisseur radiale de l'anneau continu perforé 105 est quant à elle calculée pour que - tenant compte de l'élasticité du matériau qui constitue ledit anneau 105 - lorsque une pression de quarante bars est appliquée sur la face cylindrique interne d'anneau 106, le diamètre extérieur de l'anneau continu perforé 105 soit au moins égal voire supérieur au diamètre intérieur du cylindre détendeur 13.

La pression montant graduellement dans la chambre de répartition de pression 119, le diamètre de l'anneau continu perforé 105 augmente jusqu'à ce que les surfaces de portance sur coussin d'air 116 se retrouvent à une très faible distance de la paroi du cylindre détendeur 13. C'est ce que représente la figure 20.

A ce stade de fonctionnement desdits moyens d'étanchéité de piston 53 du moteur thermique à transfert-détente et régénération 1 selon l'invention, une perte de charge significative est créée entre les surfaces de portance sur coussin d'air 116 et le cylindre détendeur 13, ladite perte s'opposant au passage du fluide d'anneau 113. En conséquence, la pression qui règne dans la gorge de distribution de pression 126 et la gorge de contrepression 117 augmente au point d'être proche de celle qui règne dans la chambre de répartition de pression 119. Il résulte de cela que la pression régnant dans ladite chambre 119 n'exerce plus un effort radial sur l'anneau continu perforé 105 qu'au niveau des surfaces de portance sur coussin d'air 116. Consécutivement à cela, du fait de son élasticité qui lui confère les attributs d'un ressort et qui le rend résistant au gonflement, l'anneau continu perforé 105 se rétracte, ce qui a pour effet d'une part, de réduire la perte de charge entre les surfaces de portance sur coussin d'air 116 et le cylindre détendeur 13 et d'autre part, de faire baisser la pression régnant dans la gorge de distribution de pression 126 et la gorge de contrepression 117, ce qui fait à nouveau gonfler l'anneau continu perforé 105.

Comme on peut le constater, l'effort de constriction qui résulte de la raideur de l'anneau continu perforé 105 et qui s'oppose au gonflement de ce dernier d'une part, et la perte de charge créée entre les surfaces de portance sur coussin d'air 116 et le cylindre détendeur 13 d'autre part, conduisent à une situation relativement instable de l'anneau continu perforé 105. En effet, lorsque le diamètre dudit anneau 105 augmente, les conditions qui ont conduit à ladite augmentation de diamètre disparaissent tandis que quand le diamètre dudit anneau 105 diminue, les conditions qui conduisent à ladite augmentation sont à nouveau réunies.

Il résulte de ceci que les surfaces de portance sur coussin d'air 116 n'ont d'autre choix que de trouver une position intermédiaire relativement stable à très faible distance du cylindre détendeur 13. Ladite distance résulte du jeu initial entre le piston détendeur 15 et le cylindre détendeur 13, de la pression qui règne dans la chambre de répartition de pression 119, de la raideur de l'anneau continu perforé 105, et de longueur axiale totale des surfaces de portance sur coussin d'air 116 par rapport à la longueur axiale totale de la face cylindrique interne d'anneau 106 qui est exposée à la pression du fluide d'anneau 113. Ladite distance résulte également de la profondeur de la gorge de contrepression 117 qui constitue en elle-même une perte de charge additionnelle.

Selon l'exemple de fonctionnement considéré ici, une fois la pression de quarante bars établie dans la chambre de répartition de pression 119, la distance entre les surfaces de portance sur coussin d'air 116 et le cylindre détendeur 13 est de l'ordre soit de quelques microns, soit de l'ordre du micron voire de la fraction de micron. C'est cette courte distance qui, combinée avec un écoulement de fluide d'anneau 113 allant toujours depuis l'évidement de contrepression 115 vers la chambre de transvasement-détente 16 et non le contraire, réalise une étanchéité poussée entre le piston détendeur 15 et le cylindre détendeur 13.

On remarque que tenant compte du monde de fonctionnement particulier desdits moyens d'étanchéité de piston 53 du moteur thermique à transfert-détente et régénération 1 selon l'invention, l'anneau continu perforé 105 tend naturellement à ce centrer dans le cylindre détendeur 13 et à s'accommoder des éventuels défauts de circularité ou de cylindricité dudit cylindre 13. En effet, la position de l'anneau continu perforé 105 résulte d'un équilibre entre, de première part, l'effort général de constriction dudit anneau 105 donné par la raideur de ce dernier et, de deuxième part, les efforts radiaux locaux appliqués en chaque point de la périphérie et de la longueur axiale de l'anneau continu perforé 105 lesdits efforts résultant de l'interaction aérodynamique entre les surfaces de portance sur coussin d'air 116 et le cylindre détendeur 13.

On note également que lesdits moyens d'étanchéité de piston 53 du moteur thermique à transfert-détente et régénération 1 selon l'invention permettent divers réglage lors de leur conception. Par exemple, toutes choses étant égales par ailleurs, le dimensionnement de la section de l'orifice calibré 111 détermine notamment la distance laissée entre les surfaces de portance sur coussin d'air 116 et le cylindre détendeur 13, ladite distance pouvant aussi être réglée par la raideur de l'anneau continu perforé 105 laquelle dépend notamment de son épaisseur.

On déduit aisément du fonctionnement qui vient être décrit qu'il est indispensable que la pression générée par la source de fluide sous pression 112 soit toujours supérieure à celle qui règne dans la chambre de transvasement-détente 16. Ceci n'exclut pas la possibilité - sur des échelles de temps suffisamment longues - d'adapter la pression générée par la source de fluide sous pression 112 à la pression maximale survenant dans la chambre de transvasement-détente 16. On note toutefois que si la chambre de pression 129 possède un clapet anti-retour de pression proportionnelle 140, la pression qui règne dans la chambre de répartition de pression 119 peut varier sur de courtes échelles de temps à l'instar de la pression qui règne dans la chambre de transvasement-détente 16. Cette stratégie peut par exemple être retenue si le piston détendeur 15 du moteur thermique à transfert-détente et régénération 1 selon l'invention qui reçoit lesdits moyens d'étanchéité de piston 53 ne définit avec le cylindre détendeur 13 qu'une seule chambre de transvasement-détente 16.

Ainsi, on comprend que lesdits moyens d'étanchéité de piston 53 du moteur thermique à transfert-détente et régénération 1 selon l'invention constituent une solution robuste pour réaliser une étanchéité efficace et durable entre le piston détendeur 15 et le cylindre détendeur 13.

En effet, le moteur thermique à transfert-détente et régénération 1 selon l'invention nécessite que la température de fonctionnement du cylindre détendeur 13 et du piston détendeur 15 soit de l'ordre de mille degrés Celsius voire davantage. A une telle température, il est exclu de recourir à quelque lubrification par huile que ce soit d'un segment ou d'une bague. Par ailleurs, quel que soit le matériau utilisé pour réaliser ledit cylindre 13 et ledit piston 15 qu'il s'agisse par exemple de céramique à base d'alumine, de zircone ou de carbure de silicium ou de tout autre matériau, à une telle température, tout contact entre ledit cylindre 13 et un segment ou un joint d'étanchéité est impossible.

Pour autant, lesdits moyens d'étanchéité de piston 53 du moteur thermique à transfert-détente et régénération 1 selon l'invention sont bel et bien compatibles avec de telles conditions opérationnelles. En effet, l'anneau continu perforé 105 ne touche jamais le cylindre détendeur 13 car il est séparé de ce dernier par un film de fluide d'anneau 113 qui peut être - à titre d'exemple non-limitatif - de l'air dont est constituée l'atmosphère. Par ailleurs, l'anneau continu perforé 105 est constamment refroidi par le débit de fluide d'anneau 113 qui le traverse et qui lèche la face cylindrique interne d'anneau 106 et la face cylindrique externe d'anneau 107. Il faut à ce titre rappeler que pour aider à ce refroidissement, la chambre de répartition de pression 119 peut héberger des moyens de diffusion de fluide d'anneau 124 tels que ceux montrés en figures 13 à 18. Ledit refroidissement permet notamment d'utiliser un anneau continu perforé 105 en acier possédant la résistance mécanique recherchée, sans dépasser la température de revenu dudit acier qui n'est que de quelques centaines de degrés Celsius. L'utilisation d'un anneau continu perforé 105 en acier porté à quelques centaines de degrés dans un cylindre détendeur 13 en céramique porté à plus de mille degrés Celsius permet en outre de maîtriser le jeu de fonctionnement entre ledit anneau 105 et ledit cylindre 13 dans de bonnes conditions, ce que le calcul démontre aisément. Ceci provient notamment du coefficient de dilatation de l'acier qui est supérieur à celui de la céramique que ledit acier soit ou non revêtu d'une couche protectrice qui le protège de l'oxydation.

On note aussi que le refroidissement de l'anneau continu perforé 105 a pour corollaire le réchauffement local du fluide d'anneau 113. Ceci permet d'une part, d'augmenter le débit volumique dudit fluide 113 à même débit massique et d'autre part, d'augmenter la viscosité et donc la portance dudit fluide 113 si par exemple ce dernier est constitué d'air atmosphérique. Ceci permet avantageusement de réduire le débit de fluide d'anneau 113 produit par la source de fluide sous pression 112 tout en permettant aux moyens d'étanchéité de piston 53 du moteur thermique à transfert-détente et régénération 1 selon l'invention de fonctionner dans les conditions recherchées. On note également qu'il est possible de régler la température du fluide d'anneau 113 avant de l'introduire dans la chambre de pression 129 ce qui permet de régler la température de fonctionnement de l'anneau continu perforé 105 et donc, le jeu de fonctionnement entre ledit anneau 105 et le cylindre détendeur 13.

On remarque également que le débit de fluide d'anneau 113 qui s'écoule entre les surfaces de portance sur coussin d'air 116 et le cylindre détendeur 13 assure le nettoyage permanent de ce dernier. Ainsi, les particules et résidus solides de toute nature ne peuvent pas adhérer au cylindre détendeur 13. En outre, il n'est pas possible à une particule provenant de la chambre de transvasement-détente 16 de passer entre les surfaces de portance sur coussin d'air 116 et le cylindre détendeur 13 car la pression des gaz dans ladite chambre 16 est inférieure à celle régnant dans la chambre de répartition de pression 119. On notera que pour garantir un fonctionnement optimal aux surfaces de portance sur coussin d'air 116, comme montré en figures 1 et 2, il est possible de prévoir un filtre à fluide d'anneau 138 qui débarrasse le fluide d'anneau 113 de toute particule dont le diamètre est par exemple supérieur à un micron avant que ledit fluide 113 ne soit introduit dans la chambre de répartition de pression 119.

La figure 3 illustre une variante du moteur thermique à transfert-détente et régénération 1 suivant l'invention selon laquelle le compresseur 2 n'est plus constitué d'un compresseur basse-pression 35 et d'un compresseur haute-pression 36, mais d'un seul compresseur à piston à double effet. On remarque toutefois en figure 3 que ledit compresseur 2 coopère avec un injecteur d'eau 56 qui pulvérise de l'eau liquide 57 dans les gaz circulants dans le conduit d'entrée de compresseur 3 avant que lesdits gaz ne soient introduits dans la chambre d'aspiration-refoulement 58 dudit compresseur 2.

Il résulte de cet ajout d'eau liquide 57 dans lesdits gaz qu'une compression proche de l'isotherme desdits gaz s'opère dans la chambre d'aspiration-refoulement 58. En effet, pendant leur compression, lesdits gaz chargés de gouttelettes d'eau liquide 57 cèdent leur chaleur auxdites gouttelettes. Ainsi, une part de l'eau liquide 57 contenue dans lesdites gouttelettes se vaporise lorsque lesdits gaz environnants leur cèdent la chaleur latente de l'eau liquide 57 correspondante, tandis que l'autre part reste à l'état liquide et monte en température, lesdits gaz cédant à ladite autre part la chaleur sensible de l'eau liquide 57 correspondante.

Il résulte de cette stratégie une réduction significative du travail ponctionné sur l'arbre de sortie de puissance 17 pour comprimer lesdits gaz. Cette réduction du travail résistant de compression se traduit par une augmentation du rendement du moteur thermique à transfert-détente et régénération 1 suivant l'invention.

Une fois le mélange de gaz et d'eau liquide 57 expulsé du compresseur 2 via le conduit de sortie de compresseur 4, le séparateur air-eau 59 se charge de récupérer l'eau liquide 57 non-vaporisée qui pourra être injectée à nouveau après avoir été refroidie dans le refroidisseur d'eau liquide 77.

On note que la fraction vaporisée dans le compresseur 2 de l'eau liquide 57 constitue une masse de gaz additionnelle destinée à être portée à une température de par exemple onze cent degrés Celsius dans le brûleur 38 avant d'être détendue par le piston détendeur 15. Le travail utile additionnel ainsi produit est également favorable au rendement du moteur thermique à transfert-détente et régénération 1 suivant l'invention.

On remarque - toujours en figure 3 - que pour compenser la perte de la fraction vaporisée dans le compresseur 2 d'eau liquide 57, un sécheur de gaz à condensation 60 peut-être prévu sur le conduit de sortie de moteur 33. Ledit sécheur 60 a pour fonction de condenser une part de la vapeur d'eau restante dans les gaz expulsés du conduit basse-pression de régénération 7, ladite vapeur provenant à la fois de la vaporisation dans le compresseur 2 de l'eau liquide 57 préalablement pulvérisée par l'injecteur d'eau 56 dans le conduit d'entrée de compresseur 3, et de la combustion des hydrocarbures dans la chambre de combustion 40, ladite combustion produisant de l'eau par combinaison de l'hydrogène du carburant avec le comburant qui est en l'occurrence et selon cet exemple de réalisation du moteur thermique à transfert-détente et régénération 1 suivant l'invention, de l'oxygène atmosphérique.

On comprend que la variante du moteur thermique à transfert-détente et régénération 1 suivant l'invention telle qu'illustrée en figure 3 est - de par sa relative complexité - particulièrement adaptée aux applications industrielles mobiles telles que la propulsion maritime, ou stationnaire telles que les centrales électriques ou les stations de pompage ou de compression. Toutefois et sous réserve d'une certaine miniaturisation et des efforts d'intégration adéquats, ladite variante peut également s'adresser au transport routier lourd ou léger, ou à toute autre application sans restriction aucune.

## Revendications

1. Moteur thermique à transfert-détente et régénération (1), comprenant
• Au moins un compresseur (2) pouvant aspirer des gaz à une certaine pression via un conduit d'entrée de compresseur (3) pour les refouler à une pression supérieure dans un conduit de sortie de compresseur (4) ;
• Au moins un échangeur thermique de régénération (5) constitué d'au moins un conduit haute-pression de régénération (6) et d'au moins un conduit basse-pression de régénération (7), une première extrémité (8) que comporte ledit conduit haute-pression (6) étant reliée au conduit de sortie de compresseur (4) tandis que les gaz circulants dans le conduit basse-pression de régénération (7) peuvent céder une partie de leur chaleur aux gaz circulants dans le conduit haute-pression de régénération (6) ;
• Au moins un conduit de sortie haute-pression de régénérateur (9) qui comporte une première extrémité (10) reliée à une deuxième extrémité (11) que comprend le conduit haute-pression de régénération (6) ;
• Au moins une source de chaleur (12) placée en un endroit quelconque du conduit de sortie haute-pression de régénérateur (9) et qui peut surchauffer des gaz qui circulent dans ledit conduit (9) ;
• Au moins un cylindre détendeur (13) dont une extrémité au moins est fermée par une culasse de cylindre détendeur (14) intégrée audit cylindre (13) ou rapportée sur ce dernier, ledit cylindre (13) hébergeant un piston détendeur (15) avec lequel il réalise une étanchéité pour former une chambre de transvasement-détente (16) de volume variable, ledit piston (15) pouvant se déplacer dans ledit cylindre (13) et étant directement ou indirectement relié à un arbre de sortie de puissance (17) par des moyens mécaniques de transmission (18) de sorte à imprimer audit arbre (17) un mouvement de rotation continue lorsque ledit piston (15) effectue des mouvements de va-et-vient dans le cylindre détendeur (13) ;
• Au moins un conduit d'admission des gaz chauds (19) qui comporte une première extrémité (20) reliée à une deuxième extrémité (21) que comprend le conduit de sortie haute-pression de régénérateur (9), ledit conduit d'admission (19) comprenant une deuxième extrémité (22) qui traverse la culasse de cylindre détendeur (14) pour déboucher dans le cylindre détendeur (13) via une bouche de conduit d'admission des gaz chauds (23)
• Au moins une soupape doseuse d'admission (24) manoeuvrée par un actionneur de soupape doseuse (25), ladite soupape (24) pouvant obturer ou ouvrir la bouche de conduit d'admission des gaz chauds (23) ;
• Au moins un conduit d'échappement des gaz détendus (26) qui comprend une première extrémité (27) qui traverse la culasse de cylindre détendeur (14) pour déboucher dans le cylindre détendeur (13) via une bouche de conduit d'échappement des gaz détendus (28), ledit conduit d'échappement (26) comprenant également une deuxième extrémité (29) reliée à une première extrémité (30) que comporte le conduit basse-pression de régénération (7) ;
• Au moins une soupape d'échappement (31) manoeuvrée par un actionneur de soupape d'échappement (32), ladite soupape (31) pouvant obturer ou ouvrir la bouche de conduit d'échappement des gaz détendus (28) ;
• Au moins un conduit de sortie de moteur (33) placé dans le prolongement d'une deuxième extrémité (34) que comporte le conduit basse-pression de régénération (7), ou confondu avec ladite deuxième extrémité (34) pour ne constituer avec cette dernière qu'une seule et même pièce, **caractérisé en ce que**
• ledit piston détendeur (15) comportant des moyens d'étanchéité de piston (53) qui sont constitués :
• D'au moins un anneau continu perforé (105) qui comporte une face cylindrique interne d'anneau (106), une face cylindrique externe d'anneau (107) et deux faces axiales d'anneau (108) ledit anneau (105) étant logé dans au moins une gorge d'anneau (109) aménagée dans le piston détendeur (15) tandis que ledit anneau (105) peut se mouvoir radialement dans la gorge d'anneau (109) sans pouvoir sortir de cette dernière ;
• De moyens d'étanchéité d'anneau (110) qui réalisent une étanchéité entre chaque face axiale d'anneau (108) et la gorge d'anneau (109), de sorte que cette dernière définisse avec l'anneau continu perforé (105) une chambre de répartition de pression (119) raccordée par un circuit de transfert (114) à une source de fluide sous pression (112) ;
• D'au moins un orifice calibré (111) qui traverse de part en part l'anneau continu perforé (105) dans son épaisseur radiale ;
• D'au moins une surface de portance sur coussin d'air (116) que comporte l'anneau continu perforé (105), ladite surface de portance (116) étant disposée à l'opposé de la chambre de répartition de pression (119).

2. Moteur thermique à transfert-détente et régénération suivant la revendication 1, **caractérisé en ce que** le compresseur (2) est bi-étagé et est constitué d'un compresseur basse-pression (35) dont la sortie est reliée à l'entrée d'un compresseur haute-pression (36) via un refroidisseur intermédiaire de compresseur (37).

3. Moteur thermique à transfert-détente et régénération suivant la revendication 1, **caractérisé en ce que** l'arbre de sortie de puissance (17) entraîne en rotation le compresseur (2).

4. Moteur thermique à transfert-détente et régénération suivant la revendication 1, **caractérisé en ce que** le conduit d'entrée de compresseur (3) comporte un injecteur d'eau (56) qui peut pulvériser de l'eau liquide (57) dans les gaz circulants dans ledit conduit (3) avant que lesdits gaz ne soient introduits dans une chambre d'aspiration-refoulement (58) que définit le compresseur (2) qui les aspire.

5. Moteur thermique à transfert-détente et régénération suivant la revendication 1, **caractérisé en ce que** le compresseur (2) définit une chambre d'aspiration-refoulement (58) dans laquelle débouche un injecteur d'eau (56), ce dernier pouvant pulvériser de l'eau liquide (57) dans les gaz introduits dans ladite chambre (58) après que lesdits gaz aient été aspirés via le conduit d'entrée de compresseur (3) par ledit compresseur (2).

6. Moteur thermique à transfert-détente et régénération selon l'une quelconque des revendications 4 ou 5, **caractérisé en ce que** le conduit de sortie de compresseur (4) comporte un séparateur air-eau (59).

7. Moteur thermique à transfert-détente et régénération selon l'une quelconque des revendications 4 ou 5, **caractérisé en ce que** le conduit de sortie de moteur (33) comporte un sécheur de gaz à condensation (60).

8. Moteur thermique à transfert-détente et régénération suivant la revendication 1, **caractérisé en ce que** le compresseur (2) comporte une soupape doseuse d'admission de compresseur (66) dont l'ouverture et la fermeture sont pilotées par un actionneur de soupape doseuse d'admission de compresseur (67), ladite soupape (66) pouvant en s'ouvrant mettre en relation le conduit d'entrée de compresseur (3) avec une chambre d'aspiration-refoulement (58) que définit le compresseur (2).

9. Moteur thermique à transfert-détente et régénération suivant la revendication 1, **caractérisé en ce que** le conduit haute-pression de régénération (6) et le conduit basse-pression de régénération (7) sont accolés l'un à l'autre sur toute ou partie de leur longueur, le sens de la circulation des gaz contenus dans le conduit haute-pression de régénération (6) étant inverse au sens de la circulation des gaz contenus dans le conduit basse-pression de régénération (7), les deux dits conduits (6, 7) constituant un échangeur thermique à contre-courant (41).

10. Moteur thermique à transfert-détente et régénération suivant la revendication 1, **caractérisé en ce que** la source de chaleur (12) est un brûleur (38) constitué d'un injecteur de carburant (39) et d'une chambre de combustion (40).

11. Moteur thermique à transfert-détente et régénération suivant la revendication 1, **caractérisé en ce que** la source de chaleur (12) est constituée d'un échangeur de chaleur primaire (46) qui extrait de la chaleur d'une source universelle de chaleur (47) pour transmettre ladite chaleur aux gaz circulant dans le conduit de sortie haute-pression de régénérateur (9) directement, ou via un circuit secondaire de transport de chaleur (48).

12. Moteur thermique à transfert-détente et régénération suivant la revendication 1, **caractérisé en ce que** la culasse de cylindre détendeur (14) comporte un clapet d'équilibrage de pression (49) qui obture ou non un conduit reliant la chambre de transvasement-détente (16) et le conduit d'admission des gaz chauds (19), ledit clapet (49) étant ouvert si la pression qui règne dans chambre de transvasement-détente (16) est supérieure à celle régnant dans le conduit d'admission des gaz chauds (19) de sorte que les gaz passent de ladite chambre (16) audit conduit (19), ledit clapet (49) étant sinon fermé de sorte que lesdits gaz ne peuvent pas passer dudit conduit (19) à ladite chambre (16) via ledit clapet (49).

13. Moteur thermique à transfert-détente et régénération suivant la revendication 1, **caractérisé en ce que** la chambre de transvasement-détente (16) comporte au moins un injecteur de carburant de maintien en température (140).

14. Moteur thermique à transfert-détente et régénération suivant la revendication 1, **caractérisé en ce que** la chambre de transvasement-détente (16) comporte au moins un injecteur d'eau anti-NOx (141).

15. Moteur thermique à transfert-détente et régénération suivant la revendication 1, **caractérisé en ce que** le piston détendeur (15) est raccordé aux moyens mécaniques de transmission (18) par une tige de piston détendeur (68) qui traverse la culasse de cylindre détendeur (14), une étanchéité étant réalisée entre ladite tige (68) et ladite culasse (14) par des moyens d'étanchéité de tige (69).

16. Moteur thermique à transfert-détente et régénération suivant la revendication 15, **caractérisé en ce que** les moyens d'étanchéité de tige (69) comprennent une étanchéité supérieure de tige (70) et une étanchéité inférieure de tige (71) suffisamment éloignées l'une de l'autre pour former - entre les deux dites étanchéités (70, 71) - une chambre à circulation d'huile (72) dans laquelle débouche un conduit d'amenée d'huile de refroidissement-lubrification (73) et de laquelle repart un conduit de sortie d'huile de refroidissement-lubrification (74).

17. Moteur thermique à transfert-détente et régénération suivant la revendication 16, **caractérisé en ce que** les moyens d'étanchéité de tige (69) coopèrent avec une bague de guidage de tige (76) logée à l'intérieur ou en dehors de la chambre à circulation d'huile (72).

18. Moteur thermique à transfert-détente et régénération suivant la revendication 1, **caractérisé en ce que** les moyens mécaniques de transmission (18) sont constitués d'une bielle (42) dont l'une des extrémités s'articule directement ou indirectement dans le piston détendeur (15) et dont l'autre extrémité s'articule autour d'une manivelle (43) solidaire de l'arbre de sortie de puissance (17).

19. Moteur thermique à transfert-détente et régénération suivant la revendication 1, **caractérisé en ce que** la soupape doseuse d'admission (24) et/ou la soupape d'échappement (31) est guidée directement ou indirectement dans une cage de soupape (50) logée dans la culasse de cylindre détendeur (14), ladite cage (50) comportant un siège sur lequel peut reposer ladite soupape (24, 31) pour constituer une étanchéité tandis que ledit siège et/ou la partie de la cage de soupape (50) qui guide ladite soupape (24, 31) est refroidi par un circuit de refroidissement de soupape (51) dans lequel circule un fluide caloporteur.

20. Moteur thermique à transfert-détente et régénération suivant la revendication 19 **caractérisé en ce que** les moyens d'étanchéité de piston (53) comprennent au moins un évidement de contrepression (115) axialement non-débouchant et aménagé en creux sur la face cylindrique externe d'anneau (107), de manière que la surface de la face cylindrique externe d'anneau (107) non-occupée par ledit évidemment (115) constitue la surface de portance sur coussin d'air (116).

21. Moteur thermique à transfert-détente et régénération suivant la revendication 19, **caractérisé en ce que** les moyens d'étanchéité de piston (53) comprennent un évidement de contrepression (115) qui est constitué d'une gorge de contrepression (117) de faible profondeur plus ou moins centrée sur la longueur axiale de la face cylindrique externe d'anneau (107), ladite gorge de contrepression (117) étant réalisée sur toute la circonférence de ladite face cylindrique externe d'anneau (107).

22. Moteur thermique à transfert-détente et régénération suivant l'une quelconque des revendications 20 et 21 **caractérisé en ce que** l'orifice calibré (111) débouche dans l'évidement de contrepression (115).

23. Moteur thermique à transfert-détente et régénération suivant la revendication 19, **caractérisé en ce que** l'orifice calibré (111) débouche dans l'évidement de contrepression (115) par l'intermédiaire d'un évidement de distribution de pression (125) aménagé en creux au fond dudit évidement de contrepression (115).

24. Moteur thermique à transfert-détente et régénération suivant la revendication 23, **caractérisé en ce que** l'évidement de distribution de pression (125) est constitué d'une gorge de distribution de pression (126) plus ou moins centrée sur la longueur axiale de la face cylindrique externe d'anneau (107), ladite gorge de distribution de pression (126) étant réalisée sur toute la circonférence de ladite face cylindrique externe d'anneau (107).

25. Moteur thermique à transfert-détente et régénération suivant la revendication 19, **caractérisé en ce qu'**au moins l'un des deux bords axiaux de la face cylindrique externe d'anneau (107) ou de la face cylindrique interne d'anneau (106) qui reçoit l'évidement de contrepression (115) se termine par une dépouille de placage de bord (118).

26. Moteur thermique à transfert-détente et régénération suivant la revendication 19 **caractérisé en ce que** les moyens d'étanchéité d'anneau (110) sont constitués d'une lèvre d'étanchéité d'anneau (121) qui est solidaire de l'anneau continu perforé (105) d'une part, et qui établit un contact étanche avec l'intérieur ou le rebord de la gorge d'anneau (109) d'autre part.

27. Moteur thermique à transfert-détente et régénération suivant la revendication 19, **caractérisé en ce que** les moyens d'étanchéité d'anneau (110) sont constitués d'une portion axiale désépaissie (139) aménagée au voisinage de l'une au moins des extrémités axiales de l'anneau continu perforé (105), ladite portion (139) étant solidaire de la gorge d'anneau (109) de façon étanche, et étant suffisamment souple pour permettre au diamètre de l'anneau continu perforé (105) d'augmenter ou de diminuer par rapport à celui de ladite gorge (109).

28. Moteur thermique à transfert-détente et régénération suivant la revendication 19 **caractérisé en ce que** l'anneau continu perforé (105) est constitué d'un matériau souple et comprend au moins un ressort circonférentiel d'anneau (123) qui tend à réduire le diamètre dudit anneau (105).

29. Moteur thermique à transfert-détente et régénération suivant la revendication 19, **caractérisé en ce que** la chambre de répartition de pression (119) héberge des moyens de diffusion de fluide d'anneau (124) qui forcent le fluide d'anneau (113) en provenance du circuit de transfert de pression (114) à lécher la plus grande surface possible de la face cylindrique interne d'anneau (106) avant de s'échapper via l'orifice calibré (111).

30. Moteur thermique à transfert-détente et régénération suivant la revendication 29, **caractérisé en ce que** les moyens de diffusion de fluide d'anneau (124) sont constitués d'une plaque de diffusion (136) logée au fond de la gorge d'anneau (106), l'une au moins des extrémités axiales de ladite plaque (136) étant munie d'au moins un orifice ou gorge latérale de plaque de diffusion (137) qui force le fluide d'anneau (113) provenant du circuit de transfert de pression (114) à déboucher dans la chambre de répartition de pression (119) par l'une au moins de ses extrémités axiales.

31. Moteur thermique à transfert-détente et régénération suivant la revendication 19, **caractérisé en ce que** la gorge d'anneau (109) présente une butée radiale d'anneau (127) qui limite la pénétration de l'anneau continu perforé (105) dans ladite gorge (109).

32. Moteur thermique à transfert-détente et régénération suivant la revendication 19, **caractérisé en ce que** le circuit de transfert de pression (114) est constitué d'un tube d'arrivée de pression (128) parallèle au cylindre détendeur (13) et solidaire du piston détendeur (15), une première extrémité dudit tube (128) débouchant à l'intérieur dudit piston (15) tandis que la deuxième extrémité dudit tube (128) débouche, via un alésage de chambre de pression (130) dans lequel il peut translater longitudinalement et de façon étanche, dans une chambre de pression (129) reliée à la source de fluide sous pression (112).

33. Moteur thermique à transfert-détente et régénération suivant la revendication 32, **caractérisé en ce que** le tube d'arrivée de pression (128) est relié à la chambre de répartition de pression (119) par au moins un conduit radial d'arrivée de pression (131).

34. Moteur thermique à transfert-détente et régénération suivant la revendication 32 **caractérisé en ce que** la chambre de pression (129) est reliée à la source de fluide sous pression (112) via un clapet anti-retour de pression proportionnelle qui permet au fluide d'anneau (113) d'aller de ladite source (112) à ladite chambre (129), mais non d'aller de ladite chambre (129) à ladite source (112).

35. Moteur thermique à transfert-détente et régénération suivant la revendication 19, **caractérisé en ce que** la gorge d'anneau (109) héberge un ressort d'expansion (133) qui prend appui sur ladite gorge (109) pour exercer un effort radial sur la face cylindrique interne d'anneau (106).

36. Moteur thermique à transfert-détente et régénération suivant la revendication 35, **caractérisé en ce que** le ressort d'expansion (133) réalise par contact une étanchéité entre la gorge d'anneau (109) et l'anneau continu perforé (105).

37. Moteur thermique à transfert-détente et régénération suivant les revendications 29 et 35 **caractérisé en ce que** le ressort d'expansion (133) est muni d'au moins un orifice de diffusion de fluide (134) et/ou d'au moins une gorge de diffusion de fluide (135) de sorte à constituer avec ledit orifice (134) et/ou ladite gorge (135) les moyens de diffusion de fluide d'anneau (124).

## Patentansprüche

1. Regenerativer Transfer-Expansions-Verbrennungsmotor (1), bestehend aus
• Mindestens einem Verdichter (2), der Gase bei einem bestimmten Druck über eine Verdichtereinlassleitung (3) ansaugen kann, um sie bei einem höheren Druck in eine Verdichterauslassleitung (4) abzuleiten;
• Mindestens einem regenerativen Wärmetauscher(5), der aus mindestens einer Regenerationshochdruckleitung (6) und mindestens einer Regenerationsniederdruckleitung (7) besteht, wobei ein erstes Ende (8), das die Hochdruckleitung (6) aufweist, mit der Verdichterauslassleitung (4) verbunden ist, während die in der Regenerationsniederdruckleitung (7) strömenden Gase einen Teil ihrer Wärme an die in der Regenerationshochdruckleitung (6) strömenden Gase abgeben können;
• mindestens einer Regenerator-Hochdruckauslassleitung (9), die ein erstes Ende (10) aufweist, das mit einem zweiten Ende (11) verbunden ist, das die Regenerationshochdruckleitung (6) umfasst;
• Mindestens einer Wärmequelle (12), die an einer beliebigen Stelle der Regenerator-Hochdruckauslassleitung (9) angeordnet ist und die in dieser Leitung (9) strömenden Gase überhitzen kann;
• Mindestens einem Expansionszylinder (13), von dem mindestens ein Ende durch einen Expansionszylinderkopf (14) verschlossen ist, der in den Zylinder (13) integriert oder auf diesen aufgesetzt ist, wobei der Zylinder (13) einen Expansionskolben (15) aufnimmt, mit dem er eine Abdichtung herstellt, um eine Transfer-Expansionskammer (16) mit variablem Volumen zu bilden, wobei der Kolben (15) in dem Zylinder (13) beweglich ist und über mechanische Übertragungsmittel (18) direkt oder indirekt mit einer Kraftabtriebswelle (17) verbunden ist, um der Welle (17) eine kontinuierliche Drehbewegung zu verleihen, wenn der Kolben (15) im Expansionszylinder (13) hin- und herbewegt wird;
• Mindestens einer Heißgaseinlassleitung (19), die ein erstes Ende (20) aufweist, das mit einem zweiten Ende (21) verbunden ist, das die Regenerator-Hochdruckauslassleitung (9) umfasst, wobei die Einlassleitung (19) ein zweites Ende (22) umfasst, das durch den Expansionszylinderkopf (14) verläuft, um über eine Einlassmündung (23) für die Heißgaseinlassleitung in den Expansionszylinder (13) zu münden;
• Mindestens einem Einlassdosierventil (24), das von einem Dosierventilbetätiger (25) gesteuert wird, wobei das Ventil (24) die Einlassmündung (23) für die Heißgaseinlassleitung verschließen oder öffnen kann;
• Mindestens einer Auslassleitung (26) für expandierte Gase, die ein erstes Ende (27) umfasst, das durch den Expansionszylinderkopf (14) verläuft und über eine Auslassleitungsmündung (28) für expandierte Gase in den Expansionszylinder (13) mündet, wobei die Auslassleitung (26) auch ein zweites Ende (29) umfasst, das mit einem ersten Ende (30) verbunden ist, das die Regenerationsniederdruckleitung (7) aufweist;
• Mindestens einem Auslassventil (31), das von einem Auslassventilbetätiger (32) gesteuert wird, wobei das Ventil (31) die Auslassleitungsmündung (28) für expandierte Gase verschließen oder öffnen kann;
• Mindestens einer Motorauslassleitung (33), die in der Verlängerung eines zweiten Endes (34), das die Regenerationsniederdruckleitung (7) aufweist, angeordnet ist oder mit dem zweiten Ende (34) zusammenfällt, um mit diesem ein einziges und gleiches Teil zu bilden, **dadurch gekennzeichnet, dass**
• der Expansionskolben (15) Kolbenabdichtungsmittel (53) umfasst, die bestehen aus:
• Mindestens einem perforierten durchgehenden Ring (105), der eine innere zylindrische Ringfläche (106), eine äußere zylindrische Ringfläche (107) und zwei axiale Ringflächen (108) aufweist, wobei der Ring (105) in mindestens einer Ringnut (109) angeordnet ist, die in dem Expansionskolben (15) ausgebildet ist, während sich der Ring (105) radial in der Ringnut (109) bewegen kann, ohne aus dieser austreten zu können;
• Ringabdichtungsmitteln (110), die eine Abdichtung zwischen jeder axialen Ringfläche (108) und der Ringnut (109) herstellen, so dass letztere mit dem perforierten durchgehenden Ring (105) eine Druckverteilungskammer (119) definiert, die über einen Transferkreis (114) mit einer Drcukfluidquelle (112) verbunden ist,
• Mindestens einer kalibrierten Öffnung (111), die durch den perforierten durchgehenden Ring (105) in seiner radialen Dicke verläuft,
• Mindestens einer luftgelagerten Auftriebsfläche (116), die der perforierte durchgehende Ring (105) aufweist, wobei die Auftriebsfläche (116) gegenüber der Druckverteilungskammer (119) angeordnet ist.

2. Regenerativer Transfer-Expansions-Verbrennungsmotor nach Anspruch 1, **dadurch gekennzeichnet, dass** der Verdichter (2) zweistufig ist und aus einem Niederdruckverdichter (35) besteht, dessen Auslass über einen Verdichter-Zwischenkühler (37) mit dem Einlass eines Hochdruckverdichters (36) verbunden ist.

3. Regenerativer Transfer-Expansions-Verbrennungsmotor nach Anspruch 1, **dadurch gekennzeichnet, dass** die Kraftabtriebswelle (17) den Verdichter (2) in Drehung versetzt.

4. Regenerativer Transfer-Expansions-Verbrennungsmotor nach Anspruch 1, **dadurch gekennzeichnet, dass** die Verdichtereinlassleitung (3) eine Wasserinspritzdüse (56) aufweist, die flüssiges Wasser (57) in die in der Leitung (3) strömenden Gase sprühen kann, bevor die Gase in eine Ansaug- und Rückführungskammer (58) eingeführt werden, die der Verdichter (2) definiert, der sie ansaugt.

5. Regenerativer Transfer-Expansions-Verbrennungsmotor nach Anspruch 1, **dadurch gekennzeichnet, dass** der Verdichter (2) eine Ansaug- und Rückführungskammer (58) definiert, in die eine Wasserinspritzdüse (56) mündet, wobei letztere flüssiges Wasser (57) in die Gase sprühen kann, die in die Kammer (58) eingeführt werden, nachdem die Gase über die Verdichtereinlassleitung (3) durch den Verdichter (2) angesaugt wurden.

6. Regenerativer Transfer-Expansions-Verbrennungsmotor nach einem der Ansprüche 4 oder 5, **dadurch gekennzeichnet, dass** die Verdichterauslassleitung (4) einen Luft-Wasser- Abscheider (59) aufweist.

7. Regenerativer Transfer-Expansions-Verbrennungsmotor nach einem der Ansprüche 4 oder 5, **dadurch gekennzeichnet, dass** die Motorauslassleitung (33) einen Kondensationsgastrockner (60) aufweist.

8. Regenerativer Transfer-Expansions-Verbrennungsmotor nach Anspruch 1 **dadurch gekennzeichnet, dass** der Verdichter (2) ein Verdichter-Einlassdosierventil (66) aufweist, dessen Öffnen und Schließen durch einen Verdichter-Einlassdosierventil-Betätiger (67) gesteuert wird, wobei das Ventil (66) beim Öffnen in der Lage ist, die Verdichtereinlassleitung (3) mit einer Ansaug- und Rückführungskammer (58), die der Verdichter (2) definiert, in Verbindung zu bringen.

9. Regenerativer Transfer-Expansions-Verbrennungsmotor nach Anspruch 1, **dadurch gekennzeichnet, dass** die Regenerationshochdruckleitung (6) und die Regenerationsniederdruckleitung (7) über ihre gesamte Länge oder einen Teil ihrer Länge aneinandergefügt sind, wobei die Strömungsrichtung der in der Regenerationshochdruckleitung (6) enthaltenen Gase der Strömungsrichtung der in der Regenerationsniederdruckleitung (7) enthaltenen Gase entgegengesetzt ist, wobei die beiden Leitungen (6, 7) einen Gegenstromwärmetauscher (41) bilden.

10. Regenerativer Transfer-Expansions-Verbrennungsmotor nach Anspruch 1, **dadurch gekennzeichnet, dass** die Wärmequelle (12) ein Brenner (38) ist, der aus einer Kraftstoffeinspritzdüse (39) und einer Brennkammer (40) besteht.

11. Regenerativer Transfer-Expansions-Verbrennungsmotor nach Anspruch 1, **dadurch gekennzeichnet, dass** die Wärmequelle (12) aus einem primären Wärmetauscher (46) besteht, der Wärme einer universellen Wärmequelle (47) entzieht, um diese Wärme direkt oder über einen sekundären Wärmetransportkreislauf (48) an die in der Regenerator-Hochdruckauslassleitung (9) strömenden Gase zu übertragen.

12. Regenerativer Transfer-Expansions-Verbrennungsmotor nach Anspruch 1, **dadurch gekennzeichnet, dass** der Expansionszylinderkopf (14) ein Druckausgleichsventil (49) aufweist, das eine Leitung, die die Transfer-Expansionskammer (16) und die Heißgaseinlassleitung (19) verbindet, verschließt oder nicht verschließt, wobei das Ventil (49) geöffnet ist, wenn der Druck in der Transfer-Expansionskammer (16) höher ist als der Druck in der Heißgaseinlassleitung (19), so dass die Gase von der Kammer {16) in die Leitung (19) strömen, wobei das Ventil (49) ansonsten geschlossen ist, so dass die Gase nicht von der Leitung (19) über das Ventil (49) in die Kammer (16) strömen können.

13. Regenerativer Transfer-Expansions-Verbrennungsmotor nach Anspruch 1, **dadurch gekennzeichnet, dass** die Transfer-Expansionskammer (16) mindestens eine Temperaturerhaltungs-Kraftstoffeinspritzdüse (140) aufweist.

14. Regenerativer Transfer-Expansions-Verbrennungsmotor nach Anspruch 1, **dadurch gekennzeichnet, dass** die Transfer-Expansionskammer (16) mindestens eine Anti-NOx-Wasserinspritzdüse (141) aufweist.

15. Regenerativer Transfer-Expansions-Verbrennungsmotor nach Anspruch 1, **dadurch gekennzeichnet, dass** der Expansionskolben (15) mit den mechanischen Übertragungsmitteln (18) über eine Expansionskolbenstange (68) verbunden ist, die durch den Expansionszylinderkopf (14) verläuft, wobei eine Abdichtung zwischen der Stange (68) und dem Zylinderkopf (14) durch Stangenabdichtungsmittel (69) erzielt wird.

16. Regenerativer Transfer-Expansions-Verbrennungsmotor nach Anspruch 15, **dadurch gekennzeichnet, dass** die Stangenabdichtungsmittel (69) eine obere Stangenabdichtung (70) und eine untere Stangenabdichtung (71) umfassen, die ausreichend weit voneinander entfernt sind, um - zwischen den beiden genannten Abdichtungen (70, 71) - eine Ölumlaufkammer (72) zu bilden, in die eine Kühlschmieröl-Zuführleitung (73) mündet und von der eine Kühlschmieröl- Auslassleitung (74) wieder abgeht.

17. Regenerativer Transfer-Expansions-Verbrennungsmotor nach Anspruch 15, **dadurch gekennzeichnet, dass** die Stangenabdichtungsmittel (69) mit einem Stangenführungsring (76) zusammenwirken, der innerhalb oder außerhalb der Ölumlaufkammer (72) angeordnet ist.

18. Regenerativer Transfer-Expansions-Verbrennungsmotor nach Anspruch 1, **dadurch gekennzeichnet, dass** die mechanischen Übertragungsmittel (18) aus einer Pleuelstange (42) bestehen, deren eines Ende direkt oder indirekt im Expansionskolben (15) angelenkt ist und deren anderes Ende um eine Kurbel (43) angelenkt ist, die fest mit der Kraftabtriebswelle (17) verbunden ist.

19. Regenerativer Transfer-Expansions-Verbrennungsmotor nach Anspruch 1, **dadurch gekennzeichnet, dass** das Einlassdosierventil (24) und/oder das Auslassventil (31) direkt oder indirekt in einem Ventilkäfig (50) geführt wird, der im Expansionszylinderkopf (14) angeordnet ist, wobei der Käfig (50) einen Sitz aufweist, auf dem das Ventil (24, 31) aufliegen kann, um eine Abdichtung zu bilden, während der Sitz und/oder der Teil des Ventilkäfigs (50), der das Ventil (24, 31) führt, durch einen Ventilkühlkreislauf (51) gekühlt wird, in dem ein Wärmeträgerfluid strömt.

20. Regenerativer Transfer-Expansions-Verbrennungsmotor nach Anspruch 19, **dadurch gekennzeichnet, dass** die Kolbenabdichtungsmittel (53) mindestens eine Gegendruckaussparung (115) umfassen, die axial nicht durchgehend ist und auf der äußeren zylindrischen Ringfläche (107) vertieft angeordnet ist, so dass die Oberfläche der äußeren zylindrischen Ringfläche (107), die nicht von der Aussparung (115) belegt ist, die luftgelagerte Auftriebsfläche (116) bildet.

21. Regenerativer Transfer-Expansions-Verbrennungsmotor nach Anspruch 19, **dadurch gekennzeichnet, dass** die Kolbenabdichtungsmittel (53) eine Gegendruckaussparung (115) umfassen, die aus einer Gegendrucknut (117) mit geringer Tiefe besteht, die mehr oder weniger mittig auf der axialen Länge der äußeren zylindrischen Ringfläche (107) liegt, wobei die Gegendrucknut (117) um den gesamten Umfang der äußeren zylindrischen Ringfläche (107) herum ausgebildet ist.

22. Regenerativer Transfer-Expansions-Verbrennungsmotor nach einem der Ansprüche 20 und 21 und 23, **dadurch gekennzeichnet, dass** die kalibrierte Öffnung (111) in die Gegendruckaussparung (115) mündet.

23. Regenerativer Transfer-Expansions-Verbrennungsmotor nach Anspruch 19, **dadurch gekennzeichnet, dass** die kalibrierte Öffnung (111) über eine Druckverteilungsaussparung (125), die vertieft am Boden der Gegendruckaussparung (115) angeordnet ist, in die Gegendruckaussparung (115) mündet.

24. Regenerativer Transfer-Expansions-Verbrennungsmotor nach Anspruch 23, **dadurch gekennzeichnet, dass** die Druckverteilungsaussparung (125) aus einer Druckverteilungsnut (126) besteht, die mehr oder weniger mittig auf der axialen Länge der äußeren zylindrischen Ringfläche (107) liegt, wobei die Druckverteilungsnut (126) um den gesamten Umfang der äußeren zylindrischen Ringfläche (107) herum ausgebildet ist.

25. Regenerativer Transfer-Expansions-Verbrennungsmotor nach Anspruch 19, **dadurch gekennzeichnet, dass** mindestens eine der beiden axialen Kanten der äußeren zylindrischen Ringfläche (107) oder der inneren zylindrischen Ringfläche (106), die die Gegendruckaussparung (115) aufnimmt, in einer Kantenplattierschräge (118) endet.

26. Regenerativer Transfer-Expansions-Verbrennungsmotor nach Anspruch 19, **dadurch gekennzeichnet, dass** das Ringabdichtungsmittel (110) aus einer Ringdichtlippe (121) besteht, die einerseits fest mit dem perforierten durchgehenden Ring (105) verbunden ist und andererseits einen Dichtkontakt mit der Innenseite oder dem Rand der Ringnut (109) herstellt.

27. Regenerativer Transfer-Expansions-Verbrennungsmotor nach Anspruch 19, **dadurch gekennzeichnet, dass** die Ringabdichtungsmittel (110) aus einem ausgedünnten axialen Abschnitt (139) bestehen, der in der Nähe mindestens eines der axialen Enden des perforierten durchgehenden Rings (105) angeordnet ist, wobei der Abschnitt (139) mit der Ringnut (109) dicht verbunden ist und ausreichend flexibel ist, um zu ermöglichen, dass der Durchmesser des perforierten durchgehenden Rings (105) bezogen auf denjenigen der Nut (109) zunimmt oder abnimmt.

28. Regenerativer Transfer-Expansions-Verbrennungsmotor nach Anspruch 19, **dadurch gekennzeichnet, dass** der perforierte durchgehende Ring (105) aus einem flexiblen Material besteht und mindestens eine Ringumfangsfeder (123) umfasst, die dazu neigt, den Durchmesser des Rings (105) zu verringern.

29. Regenerativer Transfer-Expansions-Verbrennungsmotor nach Anspruch 19, **dadurch gekennzeichnet, dass** die Druckverteilungskammer (119) Ringfluid-Diffusionsmittel (124) aufweist, die das Ringfluid (113) aus dem Drucktransferkreis (114) dazu zwingen, eine möglichst große Fläche der inneren zylindrischen Ringfläche (106) zu benetzen, bevor es durch die kalibrierte Öffnung (111) entweicht.

30. Regenerativer Transfer-Expansions-Verbrennungsmotor nach Anspruch 29, **dadurch gekennzeichnet, dass** die Ringfluid-Diffusionsmittel (124) aus einer Diffusionsplatte (136) bestehen, die am Boden der Ringnut (109) angeordnet ist, wobei mindestens eines der axialen Enden der Platte (136) mit mindestens einer seitlichen Diffusionsplattenöffnung oder -nut (137) versehen ist, die das Ringfluid (113) aus dem Drucktransferkreis (114) dazu zwingt, über mindestens eines seiner axialen Enden in die Druckverteilungskammer (119) zu münden.

31. Regenerativer Transfer-Expansions-Verbrennungsmotor nach Anspruch 19, **dadurch gekennzeichnet, dass** die Ringnut (109) einen radialen Ringanschlag (127) aufweist, der das Eindringen des perforierten durchgehenden Rings (105) in die Nut (109) begrenzt.

32. Regenerativer Transfer-Expansions-Verbrennungsmotor nach Anspruch 19, **dadurch gekennzeichnet, dass** der Drucktransferkreis (114) aus einem Druckzuführungsrohr (128) besteht, das parallel zum Expansionszylinder (13) verläuft und fest mit dem Expansionskolben (15) verbunden ist, wobei ein erstes Ende des Rohrs (128) in das Innere des Kolbens (15) mündet, während das zweite Ende des Rohrs (128) über eine Druckkammerbohrung (130), in der es in Längsrichtung und dicht translatorisch beweglich ist, in eine Druckkammer (129) mündet, die mit der Druckfluidquelle (112) verbunden ist.

33. Regenerativer Transfer-Expansions-Verbrennungsmotor nach Anspruch 32, **dadurch gekennzeichnet, dass** das Druckzuführungsrohr (128) mit der Druckverteilungskammer (119) über mindestens eine radiale Druckzuführleitung (131) verbunden ist.

34. Regenerativer Transfer-Expansions-Verbrennungsmotor nach Anspruch 32, **dadurch gekennzeichnet, dass** die Druckkammer (129) mit der Druckfluidquelle (112) über ein Proportionaldruck-Rückschlagventil verbunden ist, das es dem Ringfluid (113) ermöglicht, von der Quelle (112) zu der Kammer (129) zu fließen, aber nicht von der Kammer (129) zu der Quelle (112) zu fließen.

35. Regenerativer Transfer-Expansions-Verbrennungsmotor nach Anspruch 19, **dadurch gekennzeichnet, dass** die Ringnut (109) eine Expansionsfeder (133) aufnimmt, die auf der Nut (109) aufsitzt, um eine radiale Kraft auf die innere zylindrische Ringfläche (106) auszuüben.

36. Regenerativer Transfer-Expansions-Verbrennungsmotor nach Anspruch 35, **dadurch gekennzeichnet, dass** die Expansionsfeder (133) durch Kontakt eine Abdichtung zwischen der Ringnut (109) und dem perforierten durchgehenden Ring (105) herstellt.

37. Regenerativer Transfer-Expansions-Verbrennungsmotor nach Anspruch 29 und 35, **dadurch gekennzeichnet, dass** die Expansionsfeder (133) mit mindestens einer Fluiddiffusionsöffnung (134) und/oder mindestens einer Fluiddiffusionsnut (135) versehen ist, so dass sie mit der Öffnung (134) und/oder der Nut (135) die Ringfluid-Diffusionsmittel (124) bildet.

## Claims

1. Transfer-expansion and regeneration heat engine (1), comprising
• at least one compressor (2) being able to suction gases at a certain pressure via a compressor inlet line (3) to drive them out at a higher pressure in a compressor outlet line (4);
• at least one regeneration heat exchanger (5) consisting of at least one high-pressure regeneration line (6) and at least one regeneration low-pressure line (7), a first end (8) that said high-pressure line (6) comprises, being connected to the compressor outlet line (4) while the gases circulating in the regeneration low-pressure line (7) can surrender a portion of their heat to the gases circulating in the high-pressure regeneration line (6);
• at least one regenerator high-pressure outlet line (9) which comprises a first end (10) connected to a second end (11) that the high-pressure regeneration line (6) comprises;
• at least one heat source (12) placed in any place of the regenerator high-pressure outlet line (9) and which can overheat gases which circulate in said line (9);
• at least one expansion cylinder (13), at least one end of which is closed by an expansion cylinder head (14) integrated to said cylinder (13) or attached to the latter, said cylinder (13) housing an expansion piston (15) with which it achieves a sealing to form an transfer-expansion chamber (16) of variable volume, said piston (15) being able to be moved in said cylinder (13) and being directly or indirectly connected to a power output shaft (17) by mechanical transmission means (18) so as to impart a continuous rotation movement on said shaft (17) when said piston (15) performs reciprocating movements in the expansion cylinder (13);
• at least one hot gas inlet line (19) which comprises a first end (20) connected to a second end (21) that the regenerator high-pressure outlet line (9) comprises, said inlet line (19) comprising a second end (22) which passes through the expansion cylinder head (14) to open into the expansion cylinder (13) via a hot gas inlet line mouth (23);
• at least one inlet metering valve (24) operated by a metering valve actuator (25), said valve (24) being able to block or open the hot gas inlet line mouth (23);
• at least one expanded gas exhaust line (26) which comprises a first end (27) which passes through the expansion cylinder head (14) to open into the expansion cylinder (13) via an expanded gas exhaust line mouth (28), said exhaust line (26) also comprising a second end (29) connected to a first end (30) that the regeneration low-pressure line (7) comprises;
• at least one exhaust valve (31) operated by an exhaust valve actuator (32), said valve (31) being able to block or open the expanded gas exhaust line mouth (28);
• at least one engine outlet line (33) placed in the extension of a second end (34) that the regeneration low-pressure line (7) comprises, or combined with said second end (34) to only constitute with the latter, one single and same part, **characterised in that**
• said expansion piston (15) comprising piston sealing means (53) which consist:
• of at least one continuous perforated ring (105) which comprises an internal cylindrical ring face (106), an external cylindrical ring face (107), and two axial ring faces (108), said ring (105) being housed in at least one ring groove (109) provided in the expansion piston (15) while said ring (105) can move radially in the ring groove (109) without being able to leave the latter;
• of ring sealing means (110) which produce a sealing between each axial ring face (108) and the ring groove (109), such that the latter defines, with the continuous perforated ring (105), a pressure distribution chamber (119) connected by a transfer circuit (114) to a pressurised fluid source (112),
• of at least one calibrated opening (111) which passes right through the continuous perforated ring (105) in its radial thickness;
• of at least one air-cushion carrying surface (116) which the continuous perforated ring (105) comprises, said carrying surface (116) being disposed opposite the pressure distribution chamber (119).

2. Transfer-expansion and regeneration heat engine according to claim 1, **characterised in that** the compressor (2) is two-staged and consists of a low-pressure compressor (35), the outlet of which is connected to the inlet of a high-pressure compressor (36) via an intermediate compressor cooler (37).

3. Transfer-expansion and regeneration heat engine according to claim 1, **characterised in that** the power output shaft (17) rotatingly drives the compressor (2).

4. Transfer-expansion and regeneration heat engine according to claim 1, **characterised in that** the compressor inlet line (3) comprises a water injector (56) which can spray liquid water (57) into the gases circulating in said line (3) before said gases are introduced into a suction-delivery chamber (58) that the compressor (2) which suctions them defines.

5. Transfer-expansion and regeneration heat engine according to claim 1, **characterised in that** the compressor (2) defines a suction-delivery chamber (58) into which a water injector (56) opens, the latter being able to spray liquid water (57) into the gases introduced in said chamber (58) after said gases have been suctioned via the compressor inlet line (3) by said compressor (2).

6. Transfer-expansion and regeneration heat engine according to any one of claims 4 or 5, **characterised in that** the compressor outlet line (4) comprises an air-water separator (59).

7. Transfer-expansion and regeneration heat engine according to any one of claims 4 or 5, **characterised in that** the engine outlet line (33) comprises a condensation gas dryer (60).

8. Transfer-expansion and regeneration heat engine according to claim 1, **characterised in that** the compressor (2) comprises a compressor inlet metering valve (66), the opening and the closing of which are controlled by a compressor inlet metering valve actuator (67), said valve (66) being able to, by opening, connect the compressor inlet line (3) with a suction-delivery chamber (58) that the compressor (2) defines.

9. Transfer-expansion and regeneration heat engine according to claim 1, **characterised in that** the high-pressure regeneration line (6) and the regeneration low-pressure line (7) are attached to one another over all or some of their length, the direction of circulation of the gases contained in the regeneration high-pressure line (6) being opposite the direction of circulation of the gases contained in the regeneration low-pressure line (7), the two said lines (6, 7) constituting a countercurrent heat exchanger (41).

10. Transfer-expansion and regeneration heat engine according to claim 1, **characterised in that** the heat source (12) is a burner (38) consisting of a fuel injector (39) and a combustion chamber (40).

11. Transfer-expansion and regeneration heat engine according to claim 1, **characterised in that** the heat source (12) consists of a primary heat exchanger (46) which extracts heat from a universal heat source (47) to transmit said heat to the gases circulating in the regenerator high-pressure outlet line (9), or via a secondary heat transport circuit (48).

12. Transfer-expansion and regeneration heat engine according to claim 1, **characterised in that** the expansion cylinder head (14) comprises a pressure balancing flap (49) which blocks, or not, a line connecting the transfer-expansion chamber (16) and the hot gas inlet line (19), said flap (49) being open if the pressure which is in the transfer-expansion chamber (16) is greater than that in the hot gas inlet line (19), such that the gases pass from said chamber (16) to said line (19), said flap (49) otherwise being closed, such that said gases cannot pass from said line (19) to said chamber (16) via said flap (49) .

13. Transfer-expansion and regeneration heat engine according to claim 1, **characterised in that** the transfer-expansion chamber (16) comprises at least one temperature-maintaining fuel injector (140).

14. Transfer-expansion and regeneration heat engine according to claim 1, **characterised in that** the transfer-expansion chamber (16) comprises at least one anti-NOx water injector (141).

15. Transfer-expansion and regeneration heat engine according to claim 1, **characterised in that** the expansion piston (15) is connected to the mechanical transmission means (18) by an expansion piston rod (68) which passes through the expansion cylinder head (14), a sealing being achieved between said rod (68) and said head (14) by rod sealing means (69).

16. Transfer-expansion and regeneration heat engine according to claim 15, **characterised in that** the rod sealing means (69) comprise an upper rod seal (70) and a lower rod seal (71) which are sufficiently away from one another to form - between the two said seals (70, 71) - an oil circulation chamber (72), into which a cooling-lubrication oil inlet line (73) opens, and from which a cooling-lubrication oil outlet line (74) returns.

17. Transfer-expansion and regeneration heat engine according to claim 16, **characterised in that** the rod sealing means (69) engage with a rod guiding ring (76) housed inside or outside of the oil circulation chamber (72) .

18. Transfer-expansion and regeneration heat engine according to claim 1, **characterised in that** the mechanical transmission means (18) consist of a connecting rod (42), one of the ends of which is articulated directly or indirectly in the expansion piston (15) and the other end of which is articulated around a crank (43) secured to the power output shaft (17).

19. Transfer-expansion and regeneration heat engine according to claim 1, **characterised in that** the inlet metering valve (24) and/or the exhaust valve (31) is guided directly or indirectly in a valve cage (50) housed in the expansion cylinder head (14), said cage (50) comprising a seat on which said valve (24, 31) can rest, to constitute a seal, while said seat and/or the part of the valve cage (50) which guides said valve (24, 31) is cooled by a valve cooling circuit (51), in which a heat-transfer fluid circulates.

20. Transfer-expansion and regeneration heat engine according to claim 19, **characterised in that** the piston sealing means (53) comprise at least one counterpressure recess (115) axially non-opening and recessed in the cavity on the external cylindrical ring face (107), such that the surface of the external cylindrical ring face (107) unoccupied by said recess (115) constitutes the air-cushion carrying surface (116).

21. Transfer-expansion and regeneration heat engine according to claim 19, **characterised in that** the piston sealing means (53) comprise a counterpressure recess (115) which consists of a shallow counterpressure groove (117), more or less centred over the axial length of the external cylindrical ring face (107), said counterpressure groove (117) being made over the entire circumference of said external cylindrical ring face (107).

22. Transfer-expansion and regeneration heat engine according to any one of claims 20 and 21 and 23, **characterised in that** the calibrated opening (111) opens into the counterpressure recess (115).

23. Transfer-expansion and regeneration heat engine according to claim 19, **characterised in that** the calibrated opening (111) opens into the counterpressure recess (115) through a pressure distribution recess (125) recessed in the cavity at the bottom of said counterpressure recess (115) .

24. Transfer-expansion and regeneration heat engine according to claim 23, **characterised in that** the pressure distribution recess (125) consists of a pressure distribution groove (126), more or less centred over the axial length of the external cylindrical ring face (107), said pressure distribution groove (126) being made over the entire circumference of said external cylindrical ring face (107).

25. Transfer-expansion and regeneration heat engine according to claim 19, **characterised in that** at least one of the two axial edges of the external cylindrical ring face (107) or of the internal cylindrical ring face (106) which receives the counterpressure recess (115) ends in an edge plating clearance (118).

26. Transfer-expansion and regeneration heat engine according to claim 19, **characterised in that** the ring sealing means (110) consist of a ring sealing lip (121) which is secured to the continuous perforated ring (105), on the one hand, and which establishes a sealed contact with the inside or the rim of the ring groove (109), on the other hand.

27. Transfer-expansion and regeneration heat engine according to claim 19, **characterised in that** the ring sealing means (110) consist of a thinned axial portion (139) provided in the vicinity of at least one of the axial ends of the continuous perforated ring (105), said portion (139) being sealingly secured to the ring groove (109), and being sufficiently flexible to enable the diameter of the continuous perforated ring (105) to increase or decrease with respect to that of said groove (109).

28. Transfer-expansion and regeneration heat engine according to claim 19, **characterised in that** the continuous perforated ring (105) consists of a flexible material and comprises at least one circumferential ring spring (123) which tends to reduce the diameter of said ring (105).

29. Transfer-expansion and regeneration heat engine according to claim 19, **characterised in that** the pressure distribution chamber (119) houses ring fluid dispersion means (124) which force the ring fluid (113) coming from the pressure transfer circuit (114) to sweep the largest possible surface area of the internal cylindrical ring face (106) before escaping via the calibrated opening (111).

30. Transfer-expansion and regeneration heat engine according to claim 29, **characterised in that** the ring fluid dispersion means (124) consist of a dispersion plate (136) housed at the bottom of the ring groove (109), at least one of the axial ends of said plate (136) being provided with at least one side dispersion plate opening or groove (137) which forces the ring fluid (113) coming from the pressure transfer circuit (114) to open into the pressure distribution chamber (119) by at least one of its axial ends.

31. Transfer-expansion and regeneration heat engine according to claim 19, **characterised in that** the ring groove (109) has a radial ring abutment (127) which limits the penetration of the continuous perforated ring (105) in said groove (109).

32. Transfer-expansion and regeneration heat engine according to claim 19, **characterised in that** the pressure transfer circuit (114) consists of a pressure intake tube (128) parallel to the expansion cylinder (13) and secured to the expansion piston (15), a first end of said tube (128) opening into the inside of said piston (15), while the second end of said tube (128) opens, via a pressure chamber borehole (130) in which it can move by translation longitudinally and sealingly, into a pressure chamber (129) connected to the pressurised fluid source (112).

33. Transfer-expansion and regeneration heat engine according to claim 32, **characterised in that** the pressure intake tube (128) is connected to the pressure distribution chamber (119) by at least one pressure intake radial line (131) .

34. Transfer-expansion and regeneration heat engine according to claim 32, **characterised in that** the pressure chamber (129) is connected to the pressurised fluid source (112) via a proportional pressure non-return flap which enables the ring fluid (113) to go from said source (112) to said chamber (129), but not go from said chamber (129) to said source (112).

35. Transfer-expansion and regeneration heat engine according to claim 19, **characterised in that** the ring groove (109) houses an expansion spring (133) which bears on said groove (109) to exert a radial force on the internal cylindrical ring face (106).

36. Transfer-expansion and regeneration heat engine according to claim 35, **characterised in that** the expansion spring (133) achieves a sealing by contact between the ring groove (109) and the continuous perforated ring (105).

37. Transfer-expansion and regeneration heat engine according to claims 29 and 35, **characterised in that** the expansion spring (133) is provided with at least one fluid dispersion opening (134) and/or at least one fluid dispersion groove (135) so as to constitute the ring fluid dispersion means (124) with said opening (134) and/or said groove (135).
